# EUROPÄISCHE PATENTSCHRIFT

(11) **EP 0 747 307 B1**
(45) Veröffentlichungstag und Bekanntmachung des Hinweises auf die Patenterteilung: **30.12.1998**
(21) Anmeldenummer: 96810365.5
(22) Anmeldetag: 05.06.1996
(51) Int. Cl.: B65G 69/18, B65B 39/00, B65D 90/62

(54) **Einrichtung zum Transferieren eines fliessfähigen Gutes**
Device for transferring free-flowing products
Dispositif pour le transfert de matériau fluide

(30) Priorität: 07.06.1995 CH 1666/95
(43) Veröffentlichungstag der Anmeldung: 11.12.1996
(73) Patentinhaber: Glatt Maschinen- und Apparatebau AG, CH-4133 Pratteln (CH)
(72) Erfinder: Cathrein, Ernst, 4147 Aesch (CH); Grab, Erwin, 79595 Rümmingen (DE)
(74) Vertreter: Eder, Carl E.

(56) Entgegenhaltungen:
- EP-A- 0 447 023
- DE-C- 4 342 962

## Beschreibung

Die Erfindung betrifft eine Einrichtung zum Transferieren eines fliessfähigen, insbesondere eines teilchenförmigen oder eventuell flüssigen oder pastösen Gutes. Dieses kann zum Beispiel mindestens einen Wirkstoff und/oder Hilfsstoff für die Bildung eines Arzneimittels aufweisen.

Beim Herstellen und/oder Weiterverarbeiten und/oder Transportieren eines fliessfähigen, beispielsweise aus mehr oder weniger festen Teilchen bestehenden Gutes ist es oft erforderlich, eine das Gut enthaltende Gut-Abgabe-Vorrichtung vorübergehend mit einer Gut-Aufnahme-Vorrichtung zu verbinden, d.h. die beiden Vorrichtungen aneinander anzudocken, das Gut von der Gut-Abgabe-Vorrichtung in die Gut-Aufnahme-Vorrichtung zu transferieren und die beiden Vorrichtungen danach wieder zu trennen. Man kann zum Beispiel ein Gut mit einem zu einer Gut-Abgabe-Vorrichtung gehörenden transportierbaren Behälter zu einer beispielsweise zum Verarbeiten des Gutes dienenden, beispielsweise ortsfest installierten Gut-Aufnahme-Vorrichtung transportieren sowie in diese einfüllen und/oder ein in einer Gut-Abgabe-Vorrichtung hergestelltes und/oder verarbeitetes Gut in einen als Gut-Aufnahme-Vorrichtung dienenden, transportierbaren Behälter transferieren oder ein Gut mit einem transportierbaren Behälter in einen anderen Behälter transferieren. Dabei kann auch ein und derselbe transportierbare Behälter bei einem ersten Gut-Transfer als Teil einer Gut-Aufnahme-Vorrichtung und nachher bei einem zweiten Gut-Transfer als Teil einer Gut-Abgabe-Vorrichtung dienen. Des weitern können die Gut-Abgabe- und die Gut-Aufnahme-Vorrichtungen eventuell durch zwei im wesentlichen ortsfest angeordnete Vorrichtungen gebildet sein, von denen eine mit einer bewegbaren und verstellbaren Gut-Leitung versehen ist, die für den Gut-Transfer vorübergehend mit der anderen Vorrichtung verbunden wird.

Bekannte Einrichtungen für derartige Gut-Transfers weisen zum Beispiel einen transportierbaren, zum Abgeben des Gutes dienenden Behälter mit einem an dessen unteren Ende angeordneten Gut-Auslass und einen zum Aufnehmen des Gutes dienenden Behälter auf, der an seinem oberen Ende einen Gut-Einlass besitzt. Der Gut-Auslass und der Gut-Einlass haben je ein Gehäuse, das einen vertikalen Rohrstutzen mit einer zylindrischen Innenfläche und am unteren bzw. oberen Ende eine Öffnung mit einem horizontalen Öffnungsrand besitzt. Die beiden Behälter und die Gehäuse können ausgehend von Trenn-Stellungen, in denen sie voneinander getrennt sind, in eine Verbindungs-Stellung gebracht werden, in der die beiden Gehäuse mit die Öffnungen umschliessenden Stossbereichen aneinander stossen. Jedes der beiden Gehäuse hält eine um eine horizontale Schwenkachse verschwenkbare Verschluss-Klappe mit einer kreisförmigen Scheibe, die wahlweise eine Schliess-Stellung oder Freigabe-Stellung zum Abschliessen bzw. Freigeben des vom betreffenden Gehäuse begrenzten Durchgangs verschwenkt werden kann. Bei der Verwendung einer derartigen Einrichtung verbleiben die Klappen bei sich in Trenn-Stellungen befindenden Gehäusen üblicherweise in der Schliess-Stellung und werden erst nach dem Verbinden der beiden Gehäuse vorübergehend in die Freigabe-Stellung verschwenkt, um das in einem Behälter enthaltene Gut in den anderen Behälter umzufüllen.

Bei vielen bekannten Einrichtungen dieser Art sind die Klappen derart in den Gehäusen angeordnet, dass die Schwenkachsen in Abstand von der horizontalen Öffnung des betreffenden Gehäuses stehen. Wenn die Klappen derartiger Einrichtungen nach dem Umfüllen des Gutes wieder in die Schliess-Stellung verschwenkt und die beiden Gehäuse voneinander getrennt werden, kann Gut, das an den sich zwischen den Öffnungen und den Klappen befindenden Abschnitten der Gehäuse-Innenflächen und an den den Öffnungen zugewandten Stirnflächen der Klappen haftet, in die Umgebung gelangen. Eine solche Kontamination der Umgebung der Einrichtung kann bei Gütern mit pharmazeutisch aktiven und/oder giftigen Stoffen schwerwiegende Folgen haben. Umgekehrt können bei voneinander getrennten Gehäusen feuchte Luft, Staub und andere Verunreinigungsmaterialien aus der Umgebung durch die Öffnungen der Gehäuse bis zu den Klappen in die Gehäuse eindringen und eventuell bei einem nachfolgenden Umfüllvorgang in das umgefüllte Gut gelangen und dieses kontamininieren oder sonst schädigen.

Eine aus der DE-C 43 42 962 bekannte Kupplungs- und Verschluss-Einrichtung zum Transferieren eines Gutes besitzt zwei Gehäuse mit Rohrstutzen und zwei Klappen, die eine Scheibe sowie zwei von dieser wegragende, im Querschnitt halbkreisförmige Schwenkzapfen haben und um Schwenkachsen schwenkbar sind, welche in den von den Stirnflächen der Rohrstutzen definierten, zu den Achsen der Rohrstutzen rechtwinkligen, horizontalen Ebenen liegen. Wenn die beiden Gehäuse mit ihren Stirnflächen aneinander anstossen, liegen die Scheiben der beiden Klappen aneinander an, wobei die Schwenkachsen der beiden Klappen zusammenfallen. Die ebenen Stirnflächen der Rohrstutzen sind mit Ausnehmungen versehen, in denen im Querschnitt halbkreisförmige Lagerschalen angeordnet sind, in welche die Schwenkzapfen der Klappen in der Schliess-Stellung hineinpassen.

Wenn die Klappen ausschliesslich in den halbkreisförmigen Lagerschalen gelagert würden, könnten die Klappen bei voneinander getrennten Gehäusen aus den Lagerschalen herausfallen. Es müssen daher noch zusätzliche, in der DE-C 43 42 962 nicht offenbarte Lagermittel vorhanden sein.

Die aus der DE-C 43 42 962 bekannte Einrichtung hat auch sonst noch verschiedene Nachteile. Einer dieser Nachteile besteht darin, dass die halbkreisförmigen Ausnehmungen sowie Nuten der beiden Rohrstutzen, die Lagerschalen und die Klappen sehr genau hergestellt und vor allem beim Verbinden der beiden Rohrstutzen sehr genau gerichtet werden müssen, damit die Klappen bei miteinander verbundenen Gehäusen verschwenkt werden können. Dadurch werden die Kosten für die Herstellung der Einrichtung und der Zeitaufwand zum Verbinden bzw. Kuppeln der Gehäuse erhöht. Ein weiterer Nachteil besteht darin, dass es schwierig und aufwendig ist, die Hohlräume der beiden Rohrstutzen bei den halbkreisförmigen Ausnehmungen und Schwenkzapfen dicht gegen die Umgebung abzudichten. Die an den Rohrstutzen befestigten, die Klappen in der Schliess-Stellung abschliessenden und mindestens bei voneinander getrennten Rohrstutzen gegen Verschwenkungen sichernden Dichtungen werden beim Verschwenken der Klappen einem starken Verschleiss unterworfen. Zudem ist es bei einer praktisch verwendbaren und eventuell bei den Ausnehmungen sowie Schwenkzapfen noch durch zusätzlich zu den genannten Dichtungen vorhandenen Dichtungsmittel abgedichteten Einrichtung wahrscheinlich schwierig und zeitraubend, die Klappen für eine gründliche Reinigung der Klappen, der Rohrstutzen und der mit diesen verbundenen Behältern von den Rohrstutzen zu trennen wieder und danach mit diesen zu verbinden. Gemäss der DE-C 43 42 962 sind noch zwei Pneumatikvorrichtungen vorhanden, mit denen der obere Rohrstutzen und mit diesem verbundene Teile beim Kuppeln und Trennen der beiden Rohrstutzen gesenkt und gehoben werden. Diese Pneumatikvorrichtungen vergrössern die Herstellungskosten sowie den Platzbedarf der Einrichtung und verbrauchen zudem Druckluft und damit Energie.

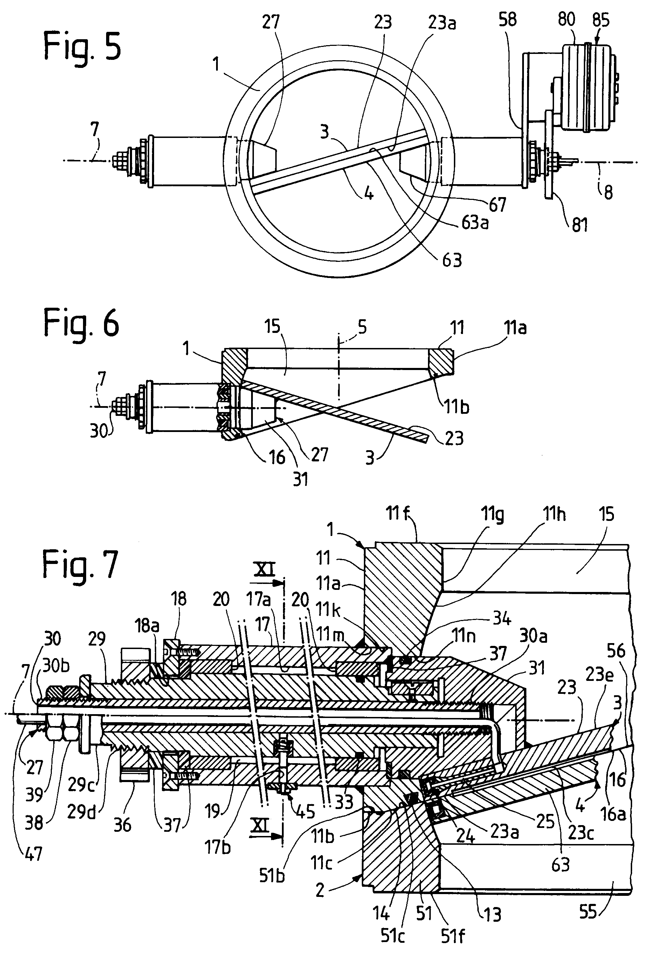

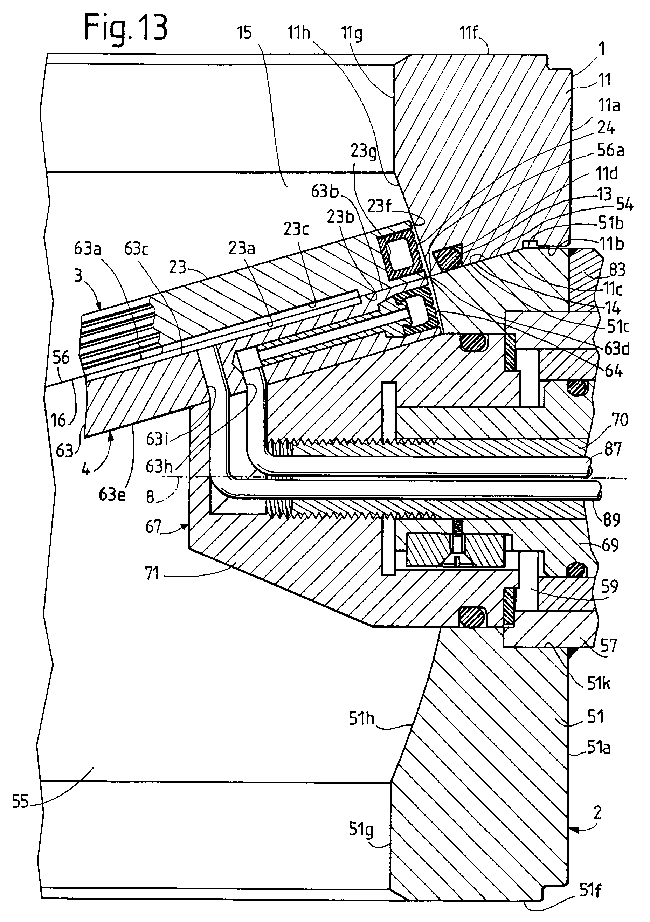

Die EP-A 0 447 023 offenbart Kupplungs- und Verschluss-Einrichtungen zum Verbinden von Leitungen, die insbesondere zum Leiten von brennbaren Flüssigkeiten und Gasen dienen. Diese bekannten Einrichtungen haben zwei Gehäuse mit Öffnungen und zwei Klappen. Wenn die beiden Gehäuse miteinander verbunden sind, liegen sie bei Öffnungsrändern aneinander an. Bei den in den Figuren 4A bis 20 dargestellten Einrichtungen liegen die Klappen dann ebenfalls aneinander an und sind um Schwenkachsen schwenkbar, welche die Öffnungen der Gehäuse durchdringen. Bei einigen dieser Einrichtungen sind jedoch keine Dichtungen zum Abdichten der Klappen gegen die Gehäuse vorhanden, so dass die Klappen in der Schliess-Stellung die Gehäuse-Innenräume bzw. Durchgänge nicht dicht abschliessen. Bei anderen der in der EP-A 0 447 023 ersichtlichen Einrichtungen sind zwar Dichtungen vorhanden, die vermutlich die Klappen mehr oder weniger gegen die Gehäuse abdichten, wenn die Klappen sich in der Schliess-Stellung befinden. Diese Dichtungen werden beim Verschwenken der Klappen jedoch Reibungskräften und Scherbeanspruchungen unterworfen, welche die zum Verschwenken der Klappen benötigten Drehmomente vergrössern und vor allem einen hohen Verschleiss der Dichtungen verursachen. Diese Dichtungen haben daher nur eine kurze Lebensdauer.

Der Erfindung liegt die Aufgabe zugrunde eine Einrichtung zum Transferieren eines fliessfähigen Gutes zu schaffen, mit der Nachteile der bekannten Einrichtungen vermieden werden können. Dabei soll insbesondere ausgehend von den aus der EP-A 0 4447 023 bekannten Einrichtung ermöglicht werden, dass die Klappen einerseits in der Schliess-Stellung die Öffnungen der Gehäuse dicht abschliessen können und andererseits leicht sowie ohne übermässigen Verschleiss von Dichtungen verschwenkbar sind.

Diese Aufgabe wird gemäss der Erfindung durch eine Einrichtung mit den Markmalen des Anspruchs 1 gelöst.

Vorteilhafte Weiterbildungen der Einrichtung gehen aus den abhängigen Ansprüchen hervor.

Wenn die Klappen verschwenkt werden sollen, können die hohlen Dichtungen in drucklosem Zustand belassen oder in diesen gebracht werden. Die Klappen können dann leicht und mindestens annähernd ohne Verschleiss der Dichtungen verschwenkt werden. Wenn sich die Klappen in der Schliess-Stellung befinden, können die hohlen Dichtungen aufgeblasen und dadurch derart deformiert werden, dass die Dichtungen die Klappen gegen die Gehäuse abdichten und die Öffnungen der Gehäuse dicht geschlossen werden.

Bei einer erfindungsgemässen Einrichtung kann zudem jede Klappe ausschliesslich mit einem einzigen, sich auf einer Seite von ihr befindenden Schwenkzapfen stabil sowie einfach in nur einem einzigen der beiden Gehäuse gelagert werden.

Der Erfindungsgegenstand wird anschliessend anhand eines in der Zeichnung dargestellten Ausführungsbeispiels näher erläutert. In der Zeichnung zeigt
die Figur 1 einen schematischen, vereinfachten Vertikalschnitt durch den Hohlkörper des oberen Gehäuses und die von diesem gehaltene, sich in der Schliess-Stellung befindende Klappe einer Einrichtung zum Transferieren eines fliessfähigen Gutes,
die Figur 2 eine zur Figur 1 analoge Darstellung des unteren Gehäuses und der von diesem gehaltenen Klappe der Einrichtung,
die Figur 3 eine Draufsicht von oben auf die beiden miteinander verbundenen Gehäuse bei sich in der Schliess-Stellung befindender Klappe,
die Figur 4 einen Vertikalschnitt durch die beiden miteinander verbundenen Gehäuse bei sich in einer Freigabe-Stellung befindenden Klappen,
die Figur 5 eine zur Figur 3 analoge Draufsicht auf die Gehäuse, aber bei sich in der Freigabe-Stellung befindenden Klappen,
die Figur 6 einen Vertikalschnitt durch das obere Gehäuse und die von dessen gehaltene, um 180° gegen die Schliess-Stellung verschwenkte Klappe,
die Figur 7 einen Vertikalschnitt durch Teile der beiden miteinander verbundenen Gehäuse sowie der von diesen gehaltenen Klappen und den im oberen Gehäuse gelagerten Schwenkzapfen in grösserem Massstab als die Figuren 1 bis 6,
die Figur 8 einen Vertikalschnitt durch einen Teil des oberen Gehäuses und der von diesem gehaltenen Klappe in noch grösserem Massstab als die Figur 7,
die Figur 9 eine Ansicht des Scheiben-Halters des im oberen Gehäuse gelagerten Schwenkzapfens von der linken Seite der Figur 7 her gesehen,
die Figur 10 eine Ansicht der sich in der Figur 7 unten befindenden Seite des Scheiben-Halters des im oberen Gehäuse gelagerten Schwenkzapfens,
die Figur 11 einen Schnitt durch Teile des oberen Gehäuses und des in diesem gelagerten Schwenkzapfens entlang der Linie XI - XI der Figur 7 in grösserem Massstab als diese,
die Figur 12 einen Vertikalschnitt durch Teile der miteinander verbundenen Gehäuse sowie der Klappen und des im unteren Gehäuse gelagerten Schwenkzapfens in grösserem Massstab als die Figuren 1 bis 6,
die Figur 13 einen Ausschnitt aus der Figur 12 in noch grösserem Massstab,
die Figur 14 einen teils in Ansicht, teils im Vertikalschnitt gezeichnete Gut-Abgabe-Vorrichtung mit einem fahrbaren Behälter und dem an diesem befestigten, oberen Gehäuse der Einrichtung,
die Figur 15 eine teils in Ansicht, teils im Vertikalschnitt gezeichnete Gut-Aufnahme-Vorrichtung mit dem unteren Gehäuse der Einrichtung,
die Figur 16 eine Draufsicht auf die in der Figur 15 ersichtliche Gut-Aufnahme-Vorrichtung und das untere Gehäuse,
die Figur 17 einen Vertikalschnitt durch Teile der Gut-Abgabe-Vorrichtung und der Gut-Aufnahme-Vorrichtung in grösserem Massstab als die Figuren 14 bis 16, wobei sich die beiden Gehäuse annähernd in der Verbindungs-Stellung befinden, und
die Figur 18 eine teils in Ansicht, teils im Vertikalschnitt gezeichnete Darstellung der Gut-Abgabe-Vorrichtung und der Gut-Aufnahme-Vorrichtung, wobei sich die beiden Gehäuse in der Verbindungs-Stellung befinden.

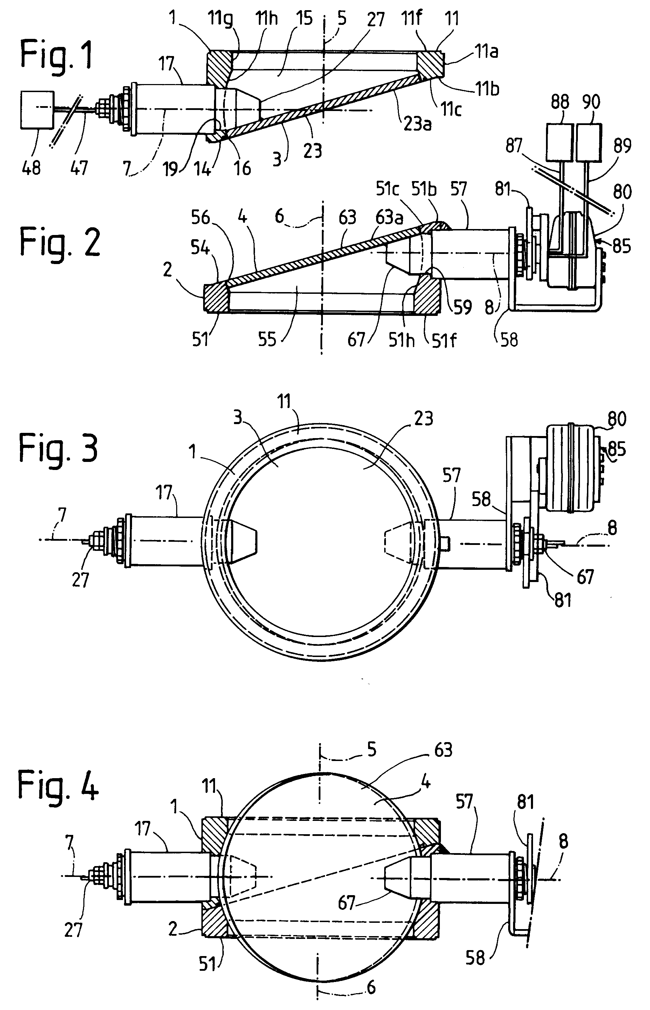

Die in verschiedenen Zuständen in den Figuren 1 bis 6 ersichtliche Verbindungs- und Verschluss-Einrichtung dient zum Transferieren eines fliessfähigen, beispielsweise aus mehr oder weniger festen Teilchen bestehenden Gutes und besitzt zwei wahlweise lösbar miteinander verbindbare - d.h. aneinander andockbare - und von einander trennbare Gehäuse, nämlich ein erstes, oberes Gehäuse 1 und ein zweites, unteres Gehäuse 2. Das erste Gehäuse 1 hält eine erste Verschluss-Klappe 3. Das zweite Gehäuse hält eine zweite Verschluss-Klappe 4. Das erste Gehäuse 1 definiert eine erste Hauptachse 5 und eine zu dieser rechtwinklige, erste Schwenkachse 7, um welche die erste Verschluss-Klappe 3 schwenkbar ist. Das zweite Gehäuse 2 definiert eine zweite Hauptachse 6 und eine zu dieser rechtwinklige, zweite Schwenkachse 8, um welche die zweite Verschluss-Klappe 4 schwenkbar ist. Die beiden Hauptachsen 5, 6 sind bei der Verwendung der Einrichtung vertikal und die Schwenkachsen 7,8 dementsprechend horizontal.

Das erste Gehäuse 1 besitzt als Hauptbestandteil einen einstückigen, ersten Hohlkörper 11, der zumindest den grössten Teil der Wandung des Gehäuses 1 bildet und auch teilweise in den Figuren 7, 8, 12, 13 ersichtlich ist. Der Hohlkörper 11 ist hülsen- und/oder ringförmig, umschliesst die erste Hauptachse 5 und hat eine zu dieser koaxiale, im wesentlichen zylindrische Aussen- oder Mantelfläche 11a sowie an seiner unteren Seite eine Stirnfläche 11b. Der innerste Abschnitt der Stirnfläche 11b besteht aus einer ebenen Ringfläche 11c, die gegen eine zur ersten Hauptachse 5 rechtwinklige, horizontale Ebene geneigt ist. Die Ringfläche 11c ist mit einer Ringnut 11d versehen, die eine aus einem O-Ring bestehende Dichtung 13 enthält. Die Ringfläche 11c bildet zusammen mit der Dichtung 13 den Stossbereich 14 des ersten Gehäuses. Der äussere Abschnitt der Stirnfläche des ersten Gehäuses 1 besteht aus einer ebenen, zur Hauptachse 5 rechtwinkligen Ringfläche. Der Hohlkörper 11 ist oben durch eine Endfläche 11f begrenzt, die zum grössten Teil aus einer ebenen, zur ersten Hauptachse 5 rechtwinkligen und dementsprechend horizontalen Ringfläche besteht. Der Hohlkörper 11 weist eine Innenfläche 11g auf, deren sich zuunterst befindender, ringförmiger Innenflächenabschnitt 11h einen Teil einer Kugelfläche bildet. An das obere Ende des Innenflächenabschnitts 11h schliesst ein zylindrischer, zur Hauptachse 5 koaxialer Innenflächenabschnitt an. Die Innenfläche 11g des ersten Gehäuses 1 umschliesst einen ersten Hohlraum 15. Die Wandung des Hohlkörpers 11 ist bei dessen Stirnfläche 11b mit einer ersten Öffnung 16 versehen. Diese hat einen ersten Öffnungsrand 16a der durch die Kante gebildet wird, bei welcher die Ringfläche 11c und der Innenflächenabschnitt 11h aneinander stossen. Der erste Öffnungsrand 16a umschliesst und definiert eine erste ebene Mündungsfläche der ersten Öffnung 16. Diese Mündungsfläche liegt in der gleichen Ebene wie die Ringfläche 11c des Hohlkörpers 11. Die Ringfläche 11c und die erste Schwenkachse 7 sind derart bezüglich einander angeordnet, dass die Schwenkachse 7 rechtwinklig zur Schnittlinie ist, bei welcher eine durch die erste Schwenkachse 7 verlaufende, horizontale Ebene die von der Ringfläche 11c und dem Rand der ersten Öffnung 16 definierte, erste, ebene Verbindungsfläche schneidet. Die erste Schwenkachse 7 dringt durch die Wand des Hohlkörpers 11 hindurch in den ersten Hohlraum 15 hinein und durch die erste Öffnung 16 hindurch wieder aus dem ersten Hohlraum 15 heraus. Die erste Hauptachse 5 und die erste Schwenkachse 7 kreuzen einander und die ebene Mündungsfläche der ersten Öffnung 16 sowie die Verbindungsfläche im Zentrum der genannten Kugelfläche. Die erste Schwenkachse 7 bildet mit der ebenen Mündungsfläche der ersten Öffnung 16 sowie der Verbindungsfläche einen spitzen Winkel. Dieser beträgt vorzugsweise mindestens 5°, vorzugsweise höchstens 45° und zum Beispiel 10° bis 30°. Der Hohlkörper 11 hat bei der Endfläche 11c ebenfalls eine Öffnung. Der Hohlraum 15 bildet also einen den Hohlkörper 11 durchdringenden Durchgang, der sich von der Öffnung 16 zu der bei der Endfläche 11f vorhandenen Öffnung erstreckt.

Der erste Hohlkörper 11 ist mit einem zur ersten Schwenkachse 7 koaxialen, die Wandung des Hohlkörpers durchdringenden, besonders deutlich in der Figur 7 ersichtlichen Loch 11k versehen, das aus einer abgestuften Bohrung besteht und einen äusseren zylindrischen Lochabschnitt 11m und einen inneren, in den Hohlraum 15 mündenden, engeren Lochabschnitt 11n hat. Das erste Gehäuse 11 weist ferner eine besonders deutlich in der Figur 7 ersichtliche erste Hülse 17 auf. Diese hat eine zylindrische Aussenfläche und ragt in den äusseren Lochabschnitt 11m hinein. Der Hohlkörper 11 und die Hülse 17 bestehen aus metallischen Materialien - zum Beispiel aus rostfreiem Stahl - und sind starr und dicht miteinander verbunden, nämlich verschweisst. Die Hülse 17 hat ein durchgehendes, axiales Loch 17a, das zylindrische Abschnitte mit verschiedenen Durchmessern aufweist. Die Hülse 17 hat ferner ein in das axiale Loch 17a mündendes radiales Loch 17b. Am äusseren Ende der Hülse 17 ist ein ringförmiges Endelement 18 mit Schrauben lösbar befestigt, das aus einem ringförmigen Plättchen bzw. Flansch besteht und ein zur ersten Schwenkachse 7 koaxiales Loch 18a aufweist. Der innere Lochabschnitt 11n des Hohlkörpers 11 und die Löcher 17a, 18a der Hülse 17 bzw. des Endelements 18 bilden zusammen ein zur ersten Schwenkachse 7 koaxiales sowie im wesentlichen rotationssymmetrisches Loch 19 der Wandung des ersten Gehäuses 1. Die Hülse 17 enthält mindestens ein und nämlich zwei in ihr axiales Loch 17a eingepresste Radial-Lager 20. Diese sind durch ringförmige, zur Schwenkachse koaxiale, diese vollständig umschliessende Gleitlager gebildet und bestehen aus einem metallischen Lagermaterial, zum Beispiel Bronze.

Die erste Verschluss-Klappe 3 besitzt eine als Verschlusskörper zum Verschliessen der ersten Öffnung 16 dienende, in der Draufsicht kreisförmige Scheibe 23 und einen einzigen, auf einer Seite von dieser und vom ersten Hohlraum 11 sowie von der ersten Öffnung 16 angeordneten, starr sowie insbesondere drehfest mit der Scheibe 23 verbundenen, aus mehreren Teilen bestehenden, ersten Schwenkzapfen 27. Dieser ist im allgemeinen rotationssymmetrisch zur ersten Schwenkachse 7, durchringt das Loch 19 des ersten Gehäuses 1 und wird vom Loch 19 oder - genauer gesagt - von den dieses begrenzenden Flächen der Wandung des ersten Gehäuses 1 im Querschnitt vollständig umschlossen. Die Scheibe 23 hat eine sich in den Figuren 1, 7, 8, 12 und 13 unten befindende Stirnfläche 23a. Diese hat bei ihrem Rand eine ringförmige, im Vergleich zum Durchmesser der Scheibe schmale, ebene Kontaktfläche 23b und eine von dieser umschlossene, den restlichen Teil der Stirnfläche 23a einnehmende Vertiefung 23c. Der die ebene Kontaktfläche 23b und damit die ganze Stirnfläche 23a aussen begrenzende Kontakt- und Stirnflächenrand 23d definiert eine Ebene, in der auch die Kontaktfläche 23b liegt. Die der Stirnfläche 23a abgewandte Rückfläche 23e der Scheibe 23 ist eben und parallel zur letztgenannten Ebene. Die Scheibe 23 hat aussen einen Rand 23f, der mit einer gegen die Umfangs- oder Randfläche der Scheibe offenen Ringnut 23g versehen ist. Die Breite der Ringnut beträgt mindestens 50% und beispielsweise mindestens oder ungefähr 70% der gesamten Breite des Randes 23f, so dass von der eigentlichen Scheibe am Rand auf beiden Seiten der Ringnut 23g nur noch je eine schmale Rippe verbleibt. Die Umfangsflächen der beiden Rippen bestehen beispielsweise aus schmalen zylindrischen Ringflächen, die in einem durch die Achse der Scheibe verlaufenden Schnitt bei ihren Rändern abgerundet oder abgeschrägt sind. Es wäre jedoch auch möglich, die Umfangsflächen der Rippen durch Abschnitte einer Kugelfläche zu bilden, deren Zentrum mindestens annähernd oder genau mit dem Zentrum der vom Innenflächenabschnitt 11h des Hohlkörpers 11 definierten Kugelfläche zusammenfällt. Die Scheibe 23 ist mit einem abgewinkelten Durchgang 23h versehen, der in der Nähe des Randes 23f bei der Rückfläche 23d der Scheibe 23 in diese eindringt und in die Ringnut 23g mündet. Die Ringnut 23g enthält eine ringförmige, hohle Dichtung 24, die aus einem im Querschnitt ungefähr viereckförmigen Schlauch besteht und auf seiner sich bei der Öffnung der Ringnut 23g befindenden Aussenseite entlang dem Umfang der Scheibe 23 verlaufende Rippen hat. Die hohle Dichtung 24 ist mit einem in den Durchgang 23h hineinragenden Nippel 25 versehen, der ein den Hohlraum der Dichtung 24 mit dem Durchgang 23h verbindendes Durchgangsloch hat.

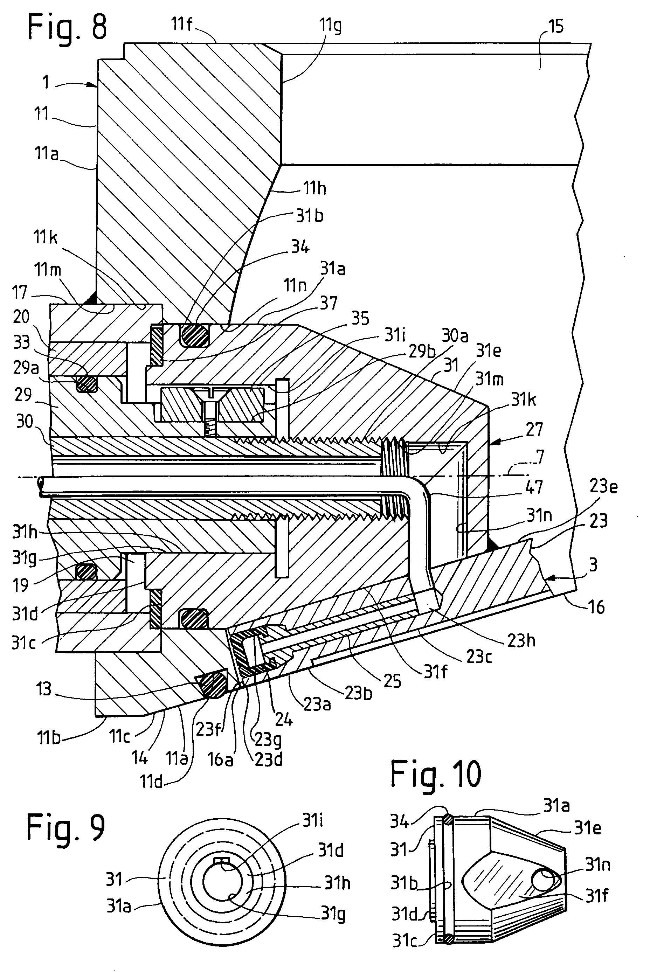

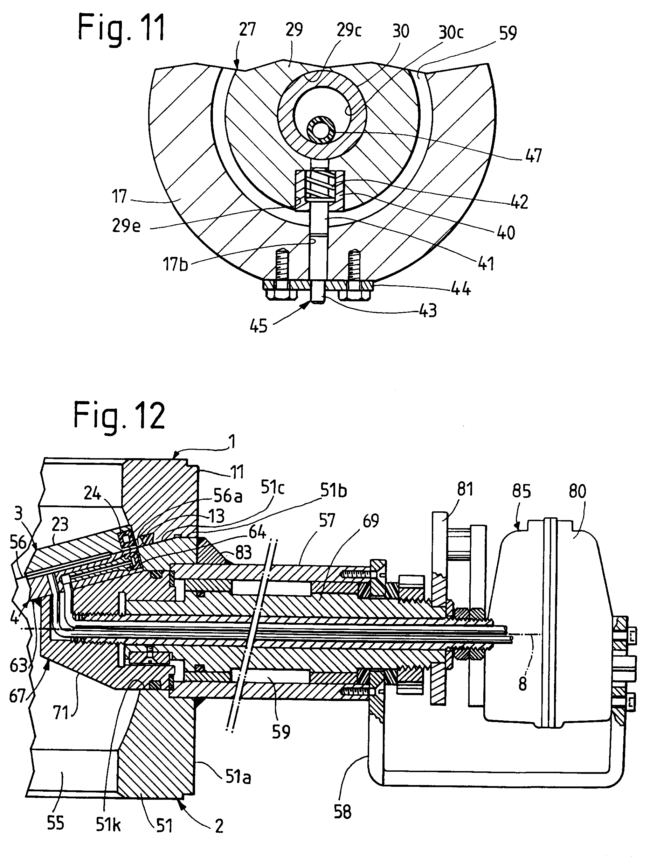

Der erste Schwenkzapfen 27 besitzt als Hauptbestandteile eine hohle Stange bzw. hohle Welle 29, einen hohlen Bolzen 30, und einen noch separat in den Figuren 9, 10 gezeichneten Scheiben-Halter 31. Die hohle Stange bzw. Welle 29 durchdringt die erste Hülse 17, die in dieser befestigten Radial-Lager 20 sowie das Endelement 18 und ist mit den sie vollständig umschliesenden Radial-Lagern 20 um die Schwenkachse 7 schwenkbar im ersten Gehäuse 1 gelagert. Die Aussenfläche der Stange bzw. Welle 29 ist mit einer Ringnut 29a versehen und mit einer in dieser angeordneten, aus einem O-Ring bestehenden, die Stange bzw. Welle 29 vollständig umschliessenden Dichtung 33 gegen die Innenfläche des sich näher beim Hohlraum 15 befindenden Radial-Lagers 20 abgedichtet. Die Stange bzw. Welle 29 ist in der Nähe ihres sich näher beim Hohlraum 15 befindenden Endes mit einer kurzen Längsnut 29b versehen. Die hohle Stange bzw. Welle 29 hat an ihrem aus dem Endelement 18 herausragenden Ende einen mehrkantförmigen, beispielsweise vierkantförmigen Abschnitt 29c und zwischen diesem und dem Endelement 18 ein Aussengewinde 29d und einen zylindrischen Abschnitt. Die hohle Stange bzw. Welle 29 hat ein axiales, durchgehendes, im wesentlichen zylindrisches Loch und zwischen den beiden Radial-Lagern 20 ein besonders deutlich in der Figur 11 ersichtliches radiales, abgestuftes Loch 29e.

Der hohle Bolzen 30 ist im wesentlichen zylindrisch, durchdringt das axiale Loch der hohlen Stange bzw. Welle 29 mit höchstens kleinem radialem Spiel und hat ein durchgehendes axiales Loch sowie an beiden aus der Stange bzw. Welle 29 herausragenden Enden ein Aussengewinde 30a bzw. 30b. Der dickste Abschnitt 31a des Scheiben-Halters 31 ist im wesentlichen zylindrisch und hat einen Durchmesser der grösser als der grösste Durchmesser der hohlen Stange bzw. Welle 29 ist, so dass der Scheiben-Halter 31 radial zur ersten Schwenkachse 7 über die Stange bzw. Welle 29 herausragt und einen Kopf des Schwenkzapfens 27 bildet. Der zylindrische Abschnitt 31a befindet sich zum Teil mit kleinem radialem Spiel im inneren Lochabschnitt 11n des Hohlkörpers 11 und ist mit einer Ringnut 31b versehen. In dieser ist eine ringförmige Dichtung 34 angeordnet, die den Scheiben-Halter 31 gegen den Hohlkörper 11 abdichtet. Der Scheiben-Halter 31 hat auf der dem Hohlraum 15 abgewandten Seite des zylindrischen Abschnitts 31a eine radiale ebene Fläche 31c und innerhalb von dieser einen in axialer Richtung vom zylindrischen Abschnitt 31a wegragenden Kragen 31d. Der Scheiben-Halter 31 besitzt ferner einen vom zylindrischen Abschnitt 31a weg gegen die Hauptachse 5 in den Hohlraum 15 hineinragenden, sich vom Abschnitt 31a weg verjüngenden, im wesentlichen konischen Abschnitt 31e. Der Scheiben-Halter 31 hat auf der der Scheibe 23 zugewandten Seite eine gegen die erste Schwenkachse 7 geneigte, ebene Fläche 31f, die sich ungefähr vom dünneren Ende des konischen Abschnitts 31e bis in den zylindrischen Abschnitt 31a erstreckt. Die Scheibe 23 liegt mit ihrer Rückfläche 23e an der ebenen Fläche 31f an und ist starr am metallischen, aus rostfreiem Stahl bestehenden Scheiben-Halter 31 befestigt, nämlich angeschweisst. Der Scheiben-Halter 31 ist mit einem zur Schwenkachse 7 koaxialen Loch 31g versehen, das aus einer abgestuften Sackbohrung besteht und bei dem ersten Hohlraum 15 abgewandten Ende des Scheiben-Halters in diesen eindringt. Das Loch 31g hat bei seiner Mündung einen zylindrischen Lochabschnitt 31h, dessen Durchmesser etwas kleiner als der Innendurchmesser der Radial-Lager 20 ist und in den ein Endabschnitt der hohlen Stange bzw. Welle 29 mindestens annähernd spielfrei hineinragt. Der Lochabschnitt 31h ist mit einer Längsnut 31i versehen und durch eine in diese sowie in die Längsnut 29b der Stange bzw. Welle 29 eingreifende, mit einer Schraube an der letzteren befestigte Passfeder 35 drehfest mit der Stange bzw. Welle 29 verbunden. Das Loch 31g hat ferner einen engeren Lochabschnitt 31k mit einem Innengewinde 31m. Der Bolzen 30 ragt in das Loch 31g hinein und ist bei seinem Aussengewinde 30a mit den Innengewinde 31m verschraubt. Der Scheiben-Halter 31 hat ein radiales Loch 31n, das bei der ebenen Fläche 31e in den Scheiben-Halter eindringt und in dem inneren Endabschnitt des axialen Lochs 31g mündet.

Ferner sind mindestens zwei und zum Beispiel drei zur axialen Lagerung des Schwenkzapfens 27 dienende ringförmige Axial-Lager 37 vorhanden, die zum Beispiel aus Kunststoff bestehen und von denen eines zwischen dem Endelement 18 sowie einer auf das Aussengewinde 29d der hohlen Stange bzw. Welle 29 aufgeschraubten, Nuten aufweisenden, selbstsichernden Mutter 36, eines auf der anderen Seite des Endelements 18 zwischen diesem sowie einer diesem zugewandten, radialen Fläche der Stange bzw. Welle 29 in der Hülse 17 und eines zwischen der radialen Fläche 31c des Scheiben-Halters 31 sowie einer dieser Fläche 31c zugewandten, radialen Fläche der Hülse 17 angeordnet ist. Dieses letzte Axial-Lager befindet sich dabei teilweise in einer Erweiterung des axialen Lochs 17a der Hülse 17 und wird vom Kragen 31d des Scheiben-Halters 31 durchdrungen. Wenn die selbstsichernde Mutter 36 ihre vorgesehene, gezeichnete Stellung einnimmt, wird die hohle Stange bzw. Welle 29 durch die beiden am Endelement 18 anliegenden Axial-Lager 37 entlang der ersten Schwenkachse 7 unverschiebbar oder mit kleinem axialem Spiel am ersten Gehäuse 1 gelagert. Auf das Aussengewinde 30b des Bolzens 30 sind zwei Muttern 38 aufgeschraubt. Diese drücken eine Unterlegscheibe gegen das dem Hohlraum 15 abgewandte, aus der Hülse 17 herausragende Ende der hohlen Stange bzw. Welle 29. Die Muttern 38 üben also eine vom Hohlraum 15 weggerichtete Kraft auf den Bolzen 30 aus, der seinerseits den Scheiben-Halter 31 gegen das zwischen dieser sowie einer radialen Fläche der Hülse 17 angeordneten Axial-Lager 37 zieht. Wie man in der Figur 7 und besonders deutlich in der Figur 8 sehen kann, sind die hohle Stange bzw. Welle 29 und der Scheiben-Halter 31 zum Beispiel derart bemessen und ausgebildet, dass der in den Lochabschnitt 31h des Scheiben-Halters 31 hineinragende Endabschnitt der hohlen Stange bzw. Welle 29 im Lochabschnitt 31h an sich noch axial verschiebbar wäre, wenn die erste Klappe 3 in das erste Gehäuse 1 eingebaut ist und wenn man nur die Stange bzw. Welle 29 sowie den Scheiben-Halter 31 für sich allein ohne die restlichen Teile betrachtet. Die axiale Stellung des Scheiben-Halters 31 bezüglich des ersten Gehäuses 1 und der hohlen Stange bzw. Welle wird dann durch den an der radialen Fläche 31c des Scheiben-Halters 31 anliegenden Axial-Lagers 35 festgelegt. Die auf dieses Axial-Lager 31 einwirkende axiale, d.h. zur ersten Schwenkachse 7 parallele Kraft kann beim Einbauen der ersten Verschluss-Klappe 4 in das erste Gehäuse 1 mit Hilfe der beiden Muttern 38 eingestellt werden. Es wäre jedoch eventuell auch möglich, die hohle Stange bzw. Welle 29 und den Scheiben-Halter 31 derart auszubilden, dass sie in zusammengebautem Zustand mit beispielsweise radialen sowie ebenen oder konischen Flächen aneinander anliegen. Dafür könnte man dann das zwischen Flächen der Hülse 17 und dem Scheiben-Halter 31 angeordneten Axial-Lager 37 oder eventuell das in der Figur 7 an der rechten Seite des Endelements 18 anliegenden Axial-Lager 37 weglassen. Der Bolzen 30, die auf diesem aufgeschraubte Mutter 38 und die zwischen den letzteren sowie dem Endelement 18 angeordnete Unterlegscheibe bilden sowohl bei der gezeichneten Ausführungsform der Klappe 3 als auch bei der vorgängig beschriebenen Variante lösbare Befestigungs- und Schiebesicherungsmittel 39, welche Teile der ersten Klappe 3 - insbesondere die Scheibe 23 und den Scheiben-Halter 31 - lösbar sowie drehfest mit der hohlen Stange bzw. Welle 29 und damit schwenkbar sowie axial unverschiebbar oder höchstens mit kleinem Spiel verschiebbar mit dem ersten Gehäuse 1 verbinden und insbesondere gegen Verschiebungen sichern, die entlang der ersten Schwenkachse 7 von der Umgebung des ersten Gehäuses 1 her gegen den ersteh Hohlraum 15 gerichtet sind.

Im radialen Loch 29e der hohlen Stange bzw. Welle 29 ist eine Buchse 40 befestigt. Diese führt zusammen mit einem Abschnitt des Lochs 29e ein Rastelement 41, das aus einem Stift mit einem Bund besteht. In der Buchse 40 ist eine Feder 42 angeordnet, die am Bund des Rastelements 41 angreift und dieses nach aussen drückt. Wenn sich die erste Klappe 3 in ihrer in den Figuren 1, 3, 7, 8, 12, 13 gezeichneten Schliess-Stellung befindet, drückt die Feder 42 das Rastelement 40 gemäss den Figuren 7, 11 in das radiale Loch 17b der Hülse 17 hinein. In dem sich bei der tiefsten Umfangsstelle der Hülse 17 befindenden Loch 17b der Hülse 17 ist ein aussen aus dem Loch 17b herausragender Druck-Stift 43 verschiebbar geführt und durch einen mit Schrauben lösbar an der Hülse 17 befestigten Anschlag 44 gegen ein Herausfallen aus dem Loch 17b gesichert. Die beiden Löcher 17b, 29e bilden zusammen mit den ihren angeordneten Teilen und dem Anschlag 44 Schwenk-Sicherungsmittel Sicherungsmittel 45, um die erste Klappe in ihrer SchliessStellung gegen unbeabsichtigte Verschwenkungen zu sichern.

Eine Gas-Leitung 47 besitzt einen Schlauch, der das axiale Loch des Bolzens 30 und das axiale Loch 31g sowie das radiale Loch 31n des Scheiben-Halters 31 durchdringt. Das eine Ende der Leitung 47 ist dicht mit dem Durchgang 23h der Scheibe 23 und durch diesen Durchgang 23h mit dem Hohlraum der Dichtung 24 verbunden. Das andere Ende der Leitung 47 ist mit einer in der Figur 1 angedeuteten Gas-Zufuhrvorrichtung 48 verbunden.

Das zweite, untere Gehäuse 2 ist weitgehend gleich wie das erste, obere Gehäuse 1 ausgebildet, aber anders angeordnet. Das Gehäuse 2 besitzt insbesondere einen zweiten, einstückigen Hohlkörper 51, der einen wesentlichen Teil der Wandung des zweiten Gehäuses bildet. Der Hohlkörper 51 besitzt eine Mantelfläche 51a und eine sich oben befindende Stirnfläche 51b mit einer der Ringfläche 11c entsprechenden Ringfläche 51c, wobei aber in dieser keine der Ringnut 11d entsprechende Ringnut vorhanden ist. Der zweite Hohlkörper 51 hat unten eine Endfläche 51f. Die Innenfläche 51g des Hohlkörpers 51 hat einen Innenflächenabschnitt 51h, der einen Teil einer Kugelfläche bildet. Der zweite Hohlkörper hat ferner ein Loch 51k, das zur zweiten Schwenkachse 8 koaxial und im übrigen analog zum Loch 11k ausgebildet ist. Die Ringfläche 51c des Hohlkörpers 51 bildet den Stossbereich 54 des zweiten Gehäuses 2.

Das zweite Gehäuse 2 umschließt einen zweiten Hohlraum 55 und eine bei der Stirnfläche 51b mit diesem verbundene, zweite Öffnung 56 mit einem zweiten Öffnungsrand 56a. Die zweite Schwenkachse 8 durchdringt die zweite Öffnung 56 analog wie die erste Schwenkachse 7 die erste Öffnung 16 durchdringt. Die zweite Schwenkachse 8 bildet dementsprechend einen spitzen Winkel mit der vom zweiten Öffnungsrand 56a definierten, zweiten, ebenen Mündungsfläche und der von dieser sowie der Ringfläche 51c gebildeten, zweiten, ebenen Verbindungsfläche.

Das zweite Gehäuse 2 weist eine zweite Hülse 57 auf. Diese ist weitgehend gleich ausgebildet wie die erste Hülse 17 und unterscheidet sich von der letzteren nur dadurch, dass sie kein dem radialen Loch 17b entsprechendes Loch enthält und dass kein dem Anschlag 44 entsprechender Anschlag an der zweiten Hülse 57 befestigt ist. An dem dem zweiten Hohlkörper 51 abgewandten Ende der zweiten Hülse 57 ist ein Endelement 58 lösbar befestigt. Das Loch 51k des zweiten Hohlkörpers 51 bildet zusammen mit dem axialen Loch der zweiten Hülse 57 und einem Loch des Endelements 58 ein zur zweiten Schwenkachse 8 koaxiales Loch 59 der Wandung des zweiten Gehäuses 2.

Die zweite Verschluss-Klappe 4 ist ebenfalls weitgehend ähnlich ausgebildet wie die erste Klappe 3 und besitzt eine als Verschlusskörper dienende kreisförmige, zweite Scheibe 63. Diese hat analog wie die erste Scheibe 23 eine Stirnfläche 63a, eine Kontaktfläche 63b, eine Vertiefung 63c, einen Kontakt- und Stirnflächenrand 63d, eine Rückfläche 63e und einen Durchgang 63h. Die zweite Scheibe ist am Rand mit einer analog zur hohlen Dichtung 24 angeordneten, hohlen Dichtung 64 versehen. Die zweite Klappe 4 besitzt ferner einen einzigen zweiten Schwenkzapfen 67 mit einer hohlen Stange bzw. hohlen Welle 69, einem hohlen Bolzen 70 und einem Scheiben-Halter 71. Der zweite Schwenkzapfen 67 ist weitgehend ähnlich ausgebildet, schwenkbar gelagert und abgedichtet wie der erste Schwenkzapfen 27 und unterscheidet sich von diesem im wesentlichen nur dadurch, dass seine hohle Stange bzw. Welle 69 kein dem radialen Loch 29e entsprechendes Loch besitzt und dementsprechend kein dem Rastelement 41 entsprechendes Rastelement hält.

Das mit Schrauben lösbar an der zweiten Hülse 57 befestigte Endelement 58 dient analog wie das Endelement 18 zusammen mit Lagern zum Lagern der hohlen Stange bzw. Welle 69 und zusätzlich zum Halten des Gehäuses einer Schwenk-Antriebsvorrichtung 80. Diese besitzt zum Beispiel einen elektrisch oder pneumatisch oder hydraulisch antreibbaren Motor, dessen Welle durch Übertragungsmittel 81 mit der Stange bzw. Welle 69 verbunden ist. Die Übertragungsmittel 81 weisen zum Beispiel ein Kurbelgetriebe mit an der Welle des Motors und am mehrkantförmigen Abschnitt der Stange bzw. Welle 69 befestigten Kurbeln und einem diese verbindenden Lenker auf. Die Schwenk-Antriebsvorrichtung 80 und/oder die Übertragungsmittel 81 sind derart ausgebildet, dass sie im Ruhezustand zusammen auch Schwenk-Sicherungsmittel 85 bilden, um die zweite Verschluss-Klappe 4 in gewissen vorgesehenen Schwenk-Stellungen und insbesondere in der Schliess-Stellung gegen unbeabsichtigte Verschwenkungen zu sichern.

Das zweite Gehäuse 2 unterscheidet sich vom ersten Gehäuse noch durch ein Übergangselement 83, das fest mit dem Hohlkörper 51 und der Hülse 57 verbunden, beispielsweise verschweisst ist und oberhalb der zweiten Schwenkachse 8 eine Deckfläche aufweist, die zum Beispiel einen bei der höchsten Stelle der Stirnfläche 51b des zweiten Hohlkörpers 51 an die Stirnfläche 51b anschliessenden, horizontalen Abschnitt und einen von diesem weg nach unten geneigten Abschnitt hat.

Der mit dem Hohlraum der Dichtung 64 verbundene Durchgang 63h der zweiten Scheibe 63 ist durch eine Gas-Leitung 87, die einen den hohlen Bolzen 70 durchdringenden Schlauch aufweist, mit einer Gas-Zufuhrvorrichtung 88 verbunden. Die beiden Gas-Zufuhrvorrichtungen 48 und 88 weisen beispielsweise einen Luft-Kompressor und/oder einen Druckluft-Speicherbehälter und Ventile auf, um den Hohlräumen der Dichtungen 24, 64 wahlweise Druckluft zuzuführen oder um die Hohlräume der Dichtungen zu entlüften.

Die zweite Klappe 4 unterscheidet sich von der ersten Klappe 3 noch dadurch, dass die Scheibe 63 der zweiten Klappe 4 ein Loch 63i besitzt, das von dem am Scheibenhalter 71 anliegenden Abschnitt der Scheiben-Rückfläche 63e in die Vertiefung 63c der Scheibe 63 führt. Ferner ist eine Gasleitung 89 mit einem Schlauch vorhanden, der ein dicht im Loch 63i der zweiten Scheibe 63 befestigtes Ende hat, durch das axiale Loch des hohlen Bolzens 70 hindurch verläuft und die Vertiefung 63c mit einer Saugvorrichtung 90 verbindet. Diese weist beispielsweise eine Vakuumpumpe und Ventile auf.

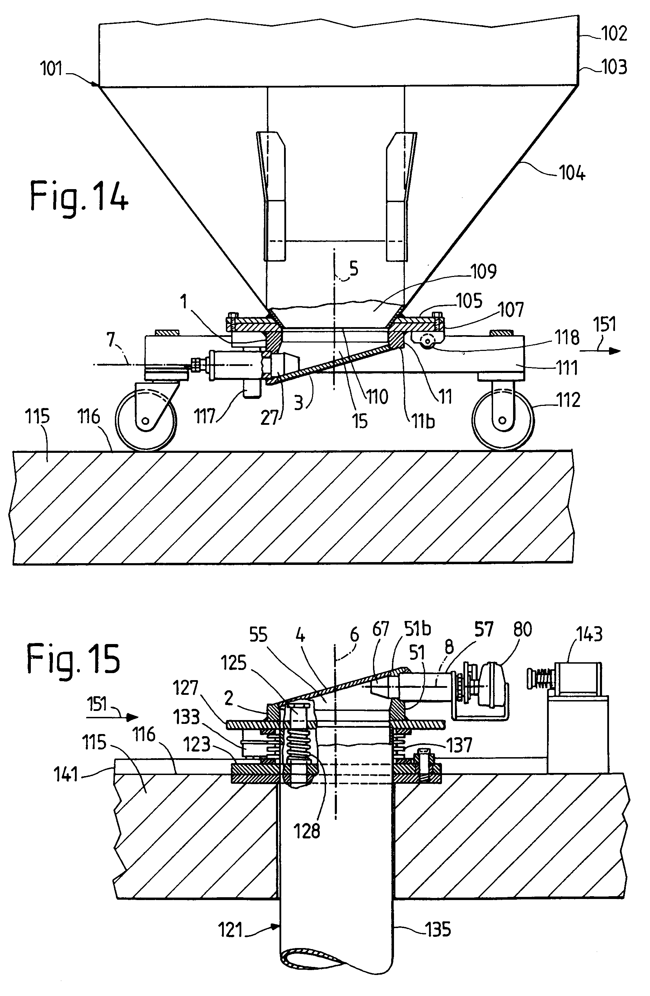

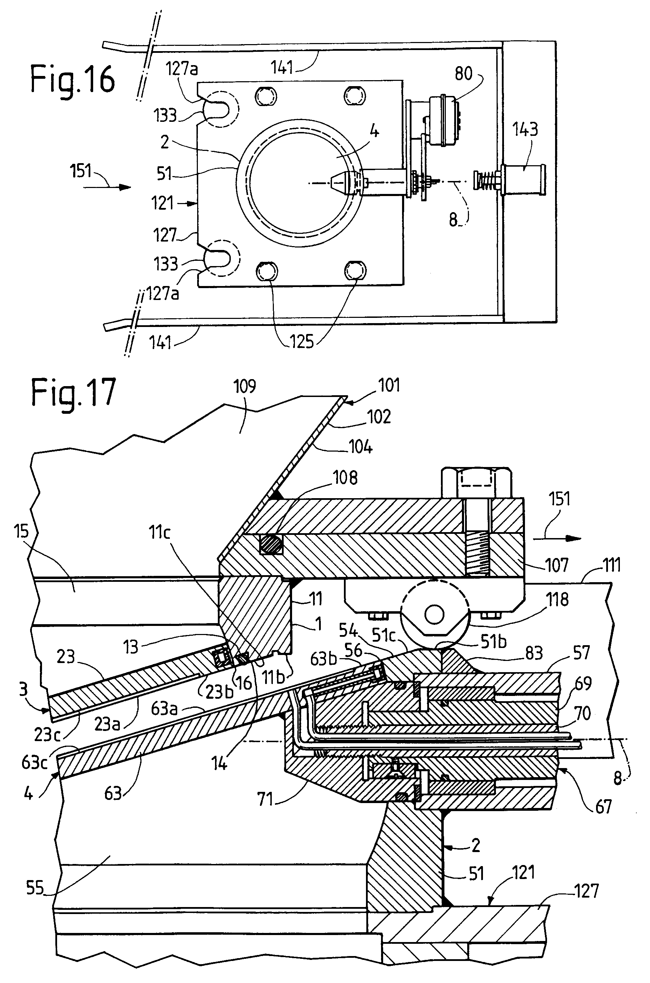

Das Gehäuse 1 und die von ihm gehaltene Verschluss-Klappe 3 können als Teile einer in der Figuren 14, 17, 18 ersichtlichen Gut-Abgabe-Vorrichtung 101 dienen. Diese weist einen zum Transportieren eines teilchenförmigen Gutes dienenden, transportierbaren, ersten Behälter 102 mit einer Wandung 103 auf, die einen konischen, sich nach unten verjüngenden Wandungsteil 104 hat. An diesem ist ein Ringflansch 105 angeschweisst. Dieser ist mittels Schrauben lösbar mit einem Ringflansch 107 verbunden, der an der Endfläche 11f des Hohlkörpers 11 des ersten Gehäuses 1 anliegt und dicht am Hohlkörper 11 befestigt, beispielsweise angeschweisst ist. Die beiden Ringflansche 105, 107 sind durch eine besonders deutlich in der Figur 17 ersichtliche Dichtung 108 gegeneinander abgedichtet. Der Behälter 101 hat zum Beispiel eine Achse, die mit der vom ersten Gehäuse 1 definierten, ersten Hauptachse 5 zusammenfällt. Die Wandung 103 umschliesst einen Behälter-Innenraum 109, der durch eine bei der tiefsten Stelle des konischen Wandungsteils 104 vorhandene Auslass-Öffnung 110 mit dem vom ersten Gehäuse 1 umschlossenen, ersten Hohlraum 15 verbunden ist. Der Behälter 102 ist lösbar oder unlösbar mit einem Fahrwerk 111 verbunden, das Räder 112 aufweist. Ein Boden 115 eines Raumes eines Fabrikationsgebäudes oder dergleichen bildet eine Auflage- und Lauffläche 116, auf welcher die Räder 112 stehen und abrollen können. Wenn die Räder auf einem ebenen, horizontalen Abschnitt der Lauffläche 116 stehen, ist die erste Hauptachse 5 vertikal und die erste Schwenkachse 7 horizontal. Die Räder 112 sind um Drehachsen drehbar, die mindestens in der in der Figur 14 gezeichneten Stellung des Behälters rechtwinklig zu einer durch die Achsen 5 und 7 verlaufenden, vertikalen Ebene sind, so dass der Behälter entlang dieser Ebene und also parallel zur ersten Schwenkachse 7 auf der Lauffläche 116 verfahrbar ist. Am Ringflansch 107 sind zwei Führungselemente 117 befestigt, die beispielsweise vertikal nach unten ragende Zapfen aufweisen. Ferner ist am Ringflansch 107 noch eine Laufrolle 118 derart in der Nähe des Hohlkörpers 11 gehalten, dass sich die tiefste Stelle der Laufrolle 118 ungefähr in der Höhe der obersten Stelle der Stirnfläche 11b des Hohlkörpers 11 befindet. Die Laufrolle 118 ist um eine Drehachse drehbar, die rechtwinklig zu einer durch die Achsen 5 und 7 verlaufenden, vertikalen Ebene ist.

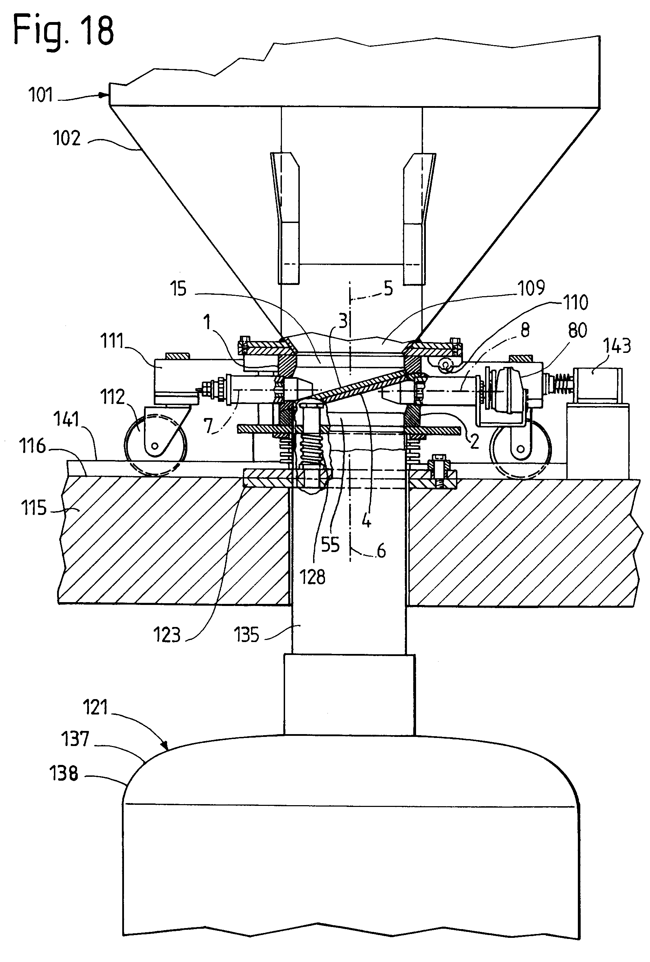

Das zweite Gehäuse 2 und die von diesem gehaltene Verschluss-Klappe 4 können als Teile eine teilweise in den Figuren 15, 16, 17 und 18 ersichtlichen Gut-Aufnahme-Vorrichtung 121 dienen. Diese weist einen ortsfest am Boden 115 befestigten, mehrteiligen Support 123 auf, an dem vier vertikale Führungsbolzen 125 befestigt sind. Diese führen eine Tragplatte 127, die durch mindestens eine Feder und nämlich vier je einen der Bolzen 125 umschliessende Federn 128 nach oben gegen Anschläge gedrückt wird, die durch Köpfe der Führungsbolzen 125 gebildet sind. Der Hohlkörper 51 des zweiten Gehäuses 2 ist derart auf der Tragplatte 127 befestigt, dass die vom zweiten Gehäuse definierte, zweite Hauptachse 6 vertikal und die zweite Schwenkachse 8 horizontal ist. Die Tragplatte hat ein Loch, das dicht mit dem vom zweiten Gehäuse 2 umschlossenen, zweiten Hohlraum 55 verbunden ist. Die Tragplatte hat zwei Führungseinschnitte 127a zum Führen der Führungselemente 117a der Gut-Abgabe-Vorrichtung 101. Die Gut-Aufnahme-Vorrichtung besitzt bei den Führungseinschnitten 127a angeordnete, am Support 123 und/oder der Tragplatte gehaltene, Zentrier- und Verriegelungsmittel 133. An der Tragplatte 127 ist ein von dieser weg vertikal durch ein Loch des Supports 123 und durch ein Loch des Bodens 115 hindurch nach unten ragendes, vertikal verschiebbares Rohr 135 befestigt. Ferner ist ein einen Abschnitt des Rohrs 135 umschliessender Faltenbalg 137 dicht am Support 123 und an der Tragplatte 127 befestigt. Die Gut-Aufnahme-Vorrichtung 121 weist als Hauptbestandteil eine in der Figur 18 angedeutete Apparatur 137 auf, die ortsfest in einem Raum unterhalb des Bodens 115 angeordnet ist, zum Verarbeiten des mit dem Behälter 102 transportierbaren Gutes dient und zum Beispiel einen ortsfesten, zweiten Behälter 138 besitzt, der dicht mit dem verschiebbaren Rohr 135 verbunden ist. Auf dem Boden 115 sind zumindest in der Nähe des Supports 123 zwei im Grundriss zur zweiten Schwenkachse 7 parallele Führungsschienen 141 befestigt, die als Führungsmittel zum Führen der Räder 112 dienen. Ferner ist ein Stossdämpfer 143 am Boden 115 befestigt.

Nun wird die Verwendung und Funktion der Verbindungs- und Verschluss-Einrichtung zum Transferieren eines im transportierbaren Behälter 102 der Gut-Abgabe-Vorrichtung 101 enthaltenen, fliessfähigen, teilchenförmigen, nicht gezeichneten Gutes in den ortsfesten Behälter 138 der Gut-Aufnahme-Vorrichtung 121 beschrieben.

Der fahrbare Behälter 102 ist zuerst derart angeordnet, dass sich die beiden Gehäuse 1 sowie 2 wie in den Figuren 1, 2, 14, 15 in Trenn-Stellungen befinden, in denen die Gehäuse voneinander getrennt sind. Die Klappen 3, 4 befinden sich dann in der in den Figuren 1, 2, 3, 7, 8, 12 bis 18 gezeichneten Schliess-Stellung. Die von den Kontaktflächen 23b und 63b sowie den Kontakt- und Stirnflächenrändern 23d bzw. 63d der beiden Scheiben 23 bzw. 63 definierten Ebenen fallen in der Schliess-Stellung der Klappen mindestens annähernd und vorzugsweise genau mit den Ebenen zusammen, in denen die Ringflächen 11c bzw. 51c und die Öffnungsränder 16a bzw. 56a liegen.

Die hohlen Dichtungen 24, 64 sind in den Figuren 7, 8, 12, 13 in drucklosem Zustand gezeichnet. Zwischen den Innenflächenabschnitten 11h und 51h der beiden Hohlkörper 11 bzw. 51 und den Rändern der Scheibe 23 bzw. 63 sowie den hohlen Dichtungen 24, 64 sind dann vorzugsweise schmale Spalte vorhanden. Diese Spalte ermöglichen, die Klappen mit geringer Kraft und ohne Verschleiss der Dichtungen 24, 64 zu verschwenken. Wenn die beiden Klappen bei der Verwendung der Einrichtung in die Schliess-Stellung verschwenkt worden sind, wird den Hohlräumen der Dichtungen 24, 64 von den Gas-Zufuhrvorrichtungen 48 bzw. 88 Gas, nämlich Druckluft zugeführt. Dadurch werden die hohlen Dichtungen 24, 64 aufgeblasen sowie deformiert, so dass die Dichtungen 24, 64 die Scheiben 23, 63 der Klappen 3 bzw. 4 sehr nahe bei den Öffnungsrändern 16a bzw. 56a gegen die Innenflächenabschnitte 11h bzw. 51h der Gehäuse abdichten und die Hohlräume 15 bzw. 45 bei den Öffnungen 16 bzw. 56 dicht abschliessen. Wenn die Gehäuse 1, 2 voneinander getrennt und die Klappen 3, 4 geschlossen sind, schliessen die letzteren also die Hohlräume 15, 55 Gehäuse 1 bzw. 2 bei den Öffnungen 16 bzw. 56 praktisch bündig mit den Ringflächen 11c bzw. 51c ab, so dass die Innenflächen 11g bzw. 51g der beiden Gehäuse praktisch vollständig gegen die Umgebung abgeschlossen sind. Ferner gelangt von jeder Klappe 3, 4 praktisch nur die Stirnfläche 23a bzw. 63a in Kontakt mit der die Gehäuse 1 bzw. 2 umgebenden Umgebungsluft.

Die Gut-Abgabe-Vorrichtung 101 mit dem das teilchenförmige Gut enthaltenden, ersten Behälter 102 wird nun zur Gut-Aufnahme-Vorrichtung 121 gefahren. Dabei rollen die Räder 112 auf der Lauffläche 116 ab, von der mindestens derjenige den Support 123 umgebende Abschnitt eben und horizontal ist, auf dem die Räder 112 in der in der Figur 18 gezeichneten Verbindungs-Stellung stehen. Die Räder 112 werden bei der Fahrt des Behälters 102 spätestens in demjenigen Fahrt- bzw. Fahrwegabschnitt, in welchem die beiden Gehäuse 1, 2 und deren Öffnungen 16 bzw. 56 aneinander im Grundriss überlappen, zwischen den beiden Schienen 141 geführt. Der Behälter 102 wird dabei in der durch einen Pfeil bezeichneten, zu den beiden Schwenkachsen 7 und 8 parallelen Fahrrichtung 151 gegen die vorgesehene Verbindungs-Stellung gefahren. Diese Fahrrichtung 151 ist im Grundriss vom ersten Schwenkzapfen 27 zu der am weitesten von dieser entfernten, höchsten Stelle des ersten Öffnungsrandes 16a des ersten Gehäuses 1 und von der am weitesten vom zweiten Schwenkzapfen 67 entfernten, tiefsten Stelle des zweiten Öffnungsrandes 56a des zweiten Gehäuses 2 zum zweiten Schwenkzapfen 67 gerichtet. Die beiden Gehäuse 1, 2 überlappen sich dementsprechend beim Annähern im Grundriss zuerst bei ihren am weitesten von den Hülsen 17 bzw. 56 und Schwenkzapfen 27 bzw. 67 entfernten Stellen - d.h. bei der höchsten Stelle der Stirnfläche 11b des ersten Gehäuses 1 bzw. der tiefsten Stelle der Stirnfläche 51b des zweiten Gehäuses 2.

Die Laufrolle 118 rollt mindestens in einem Teil des Fahrwegabschnitts, in welchem sich die beiden Gehäuse 1, 2 im Grundriss überlappen, auf der Stirnfläche 51b des zweiten Gehäuses 2, auf der Stirnfläche 63a der zweiten Klappe 23 und zuletzt auf der Deckfläche des Übergangselements 83 ab. Das zweite Gehäuse, die dieses tragende Tragplatte 127 und das Rohr 135 werden dabei entgegen der von den Federn 128 erzeugten Federkraft vertikal und nach unten verschoben.

Wenn sich das erste Gehäuse 1 zu einem grossen Teil über dem zweiten Gehäuse 2 befindet, greifen die mit dem fahrbaren Behälter 102 verbundenen, zapfenförmigen Führungselemente 117 in die Führungseinschnitte 127a der zur Gut-Aufnahme-Vorrichtung 121 gehörenden Tragplatte 127 ein und ergeben zusätzlich zur Grob-Führung durch die Führungsschienen 141 eine präzisere Fein-Führung des fahrbaren Behälters 102. Ferner steht das Fahrwerk 111 am Stossdämpfer 143 an und wird gebremst. Die bewegliche Teile aufweisenden Zentrier - und Verriegelungsmittel 133 zentrieren, richten und positionieren dann die beiden Gehäuse 1, 2 derart, dass die Hauptachsen 5, 6 zusammenfallen und die Schwenkachsen 7, 8 im Grundriss zusammenfallen. Das Fahrwerk 111 oder ein anderer Teil der beiden Vorrichtungen 101, 121 ist zum Beispiel derart ausgebildet, dass sich mindestens eines der beiden Gehäuse 1, 2 während der Positionierung durch die Zentrier -und Verriegelungsmittel nicht nur in der Richtung der Führungsschienen 141, sondern auch in einer dazu rechtwinkligen horizontalen Richtung ein wenig verschieben und eventuell auch begrenzte Verschwenkungen um verschiedene Achsen ausführen kann. Wenn sich die Laufrolle 118 beim letzten Abschnitt der Fahrt des Behältes 102 über die Stirnfläche 51b des zweiten Gehäuses 2 hinausbewegt, verschieben die Federn 128 die Tragplatte 127 und das von dieser getragene, zweite Gehäuse 2 nach oben gegen das erste Gehäuse 1, welches von den restlichen Teilen der Gut-Abgabe-Vorrichtung 101 festgehalten wird, die infolge ihres Gewichts auf der Lauffläche 116 stehen bleibt. Die Zentrier- und Verriegelungsmittel 133 verriegeln dann die Gut-Abgabe-Vorrichtung 101 und die Gut-Aufnahme-Vorrichtung gegeneinander.

Die beiden Gehäuse 1, 2 gelangen bei diesen Vorgängen in die in den Figuren 7, 12, 13, 18 gezeichnete Verbindungs-Stellung. In dieser stossen die Stossbereiche 14, 54 der Gehäuse 1 bzw. 2 aneinander an, wobei die vom ersten Gehäuse 1 gehaltene Dichtung 13 sowie vorzugsweise auch die Ringfläche 11c des ersten Gehäuses 1 an der Ringfläche 51c des zweiten Gehäuses 2 anliegt. Die durch die Ringflächen 11c, 51 sowie Öffnungsränder 16a, 56a definierten, ebenen, ersten und zweiten Verbindungsflächen sowie Mündungsflächen fallen dann mindestens annähernd und im Idealfall vollkommen zusammen. Des weitern fällt die Hauptachse 5 mit der Hauptachse 6 und die Schwenkachse 7 mit der Schwenkachse 8 zusammen. Zudem liegen die Scheiben 23, 63 der beiden Klappen 3 bzw. 4 mit den zu ihren Stirnflächen 23a bzw. 63a gehörenden Kontaktflächen 23b bzw. 63b bis zu den Kontakt- und Stirnflächenrändern 23d bzw. 63d aneinander an. Wenn sich die Klappen zudem gemäss Fig. 18 in der Schliess-Stellung befinden, liegen ihre Kontaktflächen 23b, 63b mindestens annähernd und im Idealfall vollkommen in den ebenen Mündungs- sowie Verbindungsflächen.

Die beiden Vertiefungen 23c, 63c der beiden Scheiben 23, 63 bilden in der Verbindungs-Stellung zusammen einen Hohlraum, der durch die glatten, einander anliegenden Kontaktflächen 23b, 63b mehr oder weniger dicht gegen die Hohlräume 15 und 55 abgeschlossen wird. Eventuell kann man mit der Saugvorrichtung 90 nun noch Luft aus dem von den Vertiefungen 23c und 63c gebildeten Hohlraum heraussaugen und diesen evakuieren, so dass der Luftdruck in diesem Hohlraum kleiner wird als in den Hohlräumen 15, 55 und in der Umgebung der Gehäuse 1, 2. Die beiden Scheiben 23, 63 werden dann durch den Druck der in den Hohlräumen 15, 55 vorhandenen Luft zusätzlich gegeneinander gedrückt und dadurch insbesondere auch beim Verschwenken fest miteinander verbunden, so dass sie zusammen quasi eine Scheibe bilden und einander versteifen.

Wenn nun die Klappen 3, 4 verschwenkt werden sollen, können die Hohlräume der Dichtungen 24, 64 mit Hilfe von Ventilen der Gas-Zufuhrvorrichtungen 48 bzw. 88 entlüftet werden. Ferner kann eine Person den Druck-Stift 43 ausgehend von dessen in den Figuren 7 und 11 gezeichneten Stellung vorübergehend manuell nach innen drücken und das Rastelement 41 entgegen der Kraft der Feder 42 zur ersten Schwenkachse hin aus dem Loch 17b herausschieben, bis sich die aneinander anliegenden Enden des Rastelements 41 und des Druck-Stifts 43 im ringförmigen Zwischenraum zwischen der Innenfläche der Hülse 17 und der Aussenfläche der hohlen Stange bzw. Welle 29 befinden. Dann können die beiden Klappen 3, 4 gemeinsam mit Hilfe der Schwenk-Antriebsvorrichtung 80 um ungefähr 90° in die in den Figuren 4 und 5 ersichtliche Freigabe-Stellung verschwenkt werden. Wenn die genannte Person den nicht mehr am Rastelement 41 angreifenden Druck-Stift 43 loslässt, wird dieser durch die Schwerkraft wieder in die in den Figuren 7 und 11 gezeichnete Stellung bewegt.

Die Hohlräume 15 und 55 der beiden Gehäuse 1, 2 bilden in der Verbindungs-Stellung der letzteren zusammen einen eine vertikale Achse aufweisenden Durchgang, durch den das im Behälter 102 transportierte Gut bei sich in der Freigabe-Stellung befindenden Klappen 3,4 in den Behälter 138 fallen kann. Da die Scheiben 23, 63 der beiden Klappen aneinander anliegen, kann das Gut nicht in Kontakt mit den Stirnflächen 23a bzw. 63a der beiden Scheiben gelangen.

Wenn das Gut vom Behälter 102 der Gut-Abgabe-Vorrichtung 101 in den Behälter 138 der Gut-Aufnahme-Vorrichtung 121 transferiert wurde, kann man die beiden Klappen 3, 4 gemeinsam mit der Schwenk-Antriebsvorrichtung 80 wieder in die Schliess-Stellung verschwenken. Wenn die erste Klappe 3 die Schliess-Stellung erreicht, rastet das Rastelement 41 unter der Einwirkung der Feder 42 im radialen Loch 17b der Hülse 17 ein. Man kann nun den von den Vertiefungen 23c, 63c gebildeten Hohlraum mit Hilfe eines mit der Gas-Leitung 89 verbundenen Ventils belüften. Danach kann man den Behälter 102 ausgehend von seiner in der Figur 18 gezeichneten Stellung auf der Lauffläche 116 entgegen der Fahrrichtung 151 von der GutAufnahme-Vorrichtung wegfahren, wobei die beiden Gehäuse 1, 2 voneinander getrennt werden und in Trenn-Stellungen gelangen.

Da das transferierte Gut nie in Kontakt mit den Stirnflächen 23a, 63a der Scheiben 23 bzw. 63 gelangt und da diese die Hohlräume 15 bzw. 55 in der Schliess-Stellung praktisch bis zu den Öffnungsrändern 16a bzw. 56a abschliessen, kann nach dem Transferieren von Gut praktisch kein allenfalls noch an den Innenflächen 11g, 51g oder an den Klappen haftendes Gut in die Umgebung der Gehäuse gelangen. Umgekehrt kann in der Schliess-Stellung kein VerunreinigungsMaterial aus der Umgebung in die Hohlräume 15, 55 der Gehäuse und das transferierte Gut gelangen.

Die Schwenkzapfen 27 und 67 werden durch die verschiedenen, die Schwenkachsen sowie zu diesen rotationssymmetrische Abschnitte der Schwenkzapfen vollständig umschliessenden Lager sowohl bei miteinander verbundenen als auch bei voneinander getrennten Gehäusen 1,2 und in allen Schwenkstellungen der Klappen einwandfrei und stabil gelagert. Desgleichen werden die Schwenkzapfen 27, 67 durch die ringförmigen, die erste Schwenkachse 7 sowie zu dieser rotationssymmetrische Abschnitte des ersten Schwenkzapfens 27 vollständig umschliessenden Dichtungen 33, 34 und die entsprechenden, die zweite Schwenkachse 8 sowie den zweiten Schwenkzapfen 67 umschliessenden Dichtungen sowohl bei miteinander verbundenen als auch bei voneinander getrennten Gehäusen 1, 2 und in allen Schwenk-Stellungen der Klappen einwandfrei gegen die Gehäuse abgedichtet.

Die gute Lagerung und Abdichtung der Schwenkzapfen gewährleisten in Kombination mit der Anordnung der Scheiben der Klappen 3, 4, dass das transportierte Gut die Umgebung der Einrichtung nicht kontaminiert und dass auch keine Verunreinigungsmaterialien aus der Umgebung in die Hohlräume 15, 55 der Gehäuse gelangen, so dass auch das Gut nicht kontaminiert wird.

Wenn die beiden Gehäuse voneinander getrennt sind, wenn sich die Klappen in der Schliess-Stellung befinden und wenn zum Beispiel das erste Gehäuse 1 und die erste Klappe 3 gereinigt werden sollen, kann man das Rastelement 41 nach innen aus dem Loch 17b herausdrücken, mit einem Schlüssel oder sonstigen Werkzeug am mehrkantförmigen Abschnitt 29c der hohlen Stange bzw. Welle 29 angreifen und die Klappe um ungefähr 180° in die in der Figur 6 gezeichnete Ausbau/Einbau-Stellung verschwenken. Danach kann man die beiden Muttern 38 von der Umgebung des Gehäuses 1 her vom Bolzen 30 abschrauben und die Scheibe 23, den Scheiben-Halter 31, den Bolzen 30 sowie den Schlauch der Leitung 47 in der Figur 6 nach rechts verschieben und durch die Öffnung 16 aus dem Hohlkörper 11 herausnehmen. Die in Kontakt mit dem transferierten Gut gelangten Flächen des Gehäuses 1 und der Klappe 3 können nun gut gereinigt werden. Danach kann man die ausgebauten Teile der Klappe 3 wieder in das Gehäuse 1 einführen und mit den Muttern 38 befestigen.

Für die Reinigung des zweiten Gehäuses 2 und der zweiten Klappe 4 kann man die letztere mit Hilfe der Schwenk-Antriebsvorrichtung 80 oder eines Werkzeugs in eine Ausbau/Einbau-Stellung verschwenken, welche der in der Figur 6 gezeichneten Stellung der Klappe 3 entspricht, und die Scheibe 63 der zweiten Klappe 4 dann vorübergehend ausbauen.

Die Einrichtung kann in verschiedener Hinsicht geändert werden.

Man kann zum Beispiel die Gehäuse 1, 2 bei den Stirnflächen noch mit Flanschen versehen, die durch Schrauben oder andere Verbindungsmittel lösbar miteinander verbunden werden können. Des weitern kann man die Formen der Gehäuse 1, 2 und die mit diesen verbundenen Behälter und/oder sonstigen Teile der Gut-Abgabe- und Gut-Aufnahme-Vorrichtungen auf mancherlei Arten ändern.

Ferner kann man die in der Verbindungs-Stellung der Gehäuse einander anliegenden Stirnflächen der beiden Scheiben eventuell noch mit einer möglichst nahe bei den Stirnflächenrändern angeordneten Dichtung gegeneinander abdichten. Es besteht jedoch auch die Möglichkeit, die Gas-Leitung 89 sowie die Saugvorrichtung 90 wegzulassen und auf die Evakuierung des in der Verbindungs-Stellung von den Vertiefungen 23c, 63c der Scheiben gebildeten Hohlraums zu verzichten.

Des weitern kann man die an den Scheiben 23, 63 angeordneten, hohlen aufblasbaren Dichtungen 24, 63 weglassen und dafür an den Gehäusen 1 und 2 aufblasbare Dichtungen befestigen, mit denen die Scheiben der Klappen in der Schliess-Stellung gegen die Gehäuse abgedichtet werden können. Diese Dichtungen werden dann derart angeordnet, dass sie die Gehäuse und Scheiben der Klappen möglichst nahe oder unmittelbar bei den Öffnungsrändern der Gehäuse und den Stirnflächenrändern der Scheiben der Klappen abdichten. Die Randflächen der Scheiben können dann eventuell ebenfalls Teile von Kugelflächen bilden.

Die Lagermittel und Dichtungsmittel zum schwenkbaren Lagern und Abdichten der Schwenkzapfen sowie die letzteren selbst können selbstverständlich auch variiert werden. Man kann die Schwenkzapfen beispielsweise mit Wälzlagern lagern und die Anzahl sowie Anordnung der Dichtungen dann entsprechend anpassen. Eventuell kann man jeden Schwenkzapfen nur mit einem einzigen Lager lagern und/oder nur mit einer einzigen, ihn umschliessenden Dichtung gegen einen Abschnitt des Gehäuses und/oder ein von diesem gehaltenes Lager abdichten.

Der Schwenk-Antriebsvorrichtung 90 kann anstelle eines Motors eine manuell drehbare Kurbel oder dergleichen oder einen Zylinder mit einem pneumatisch oder hydraulisch verstellbaren Kolben aufweisen. Nötigenfalls kann man für die Sicherung der zweiten Klappe gegen Verschwenkungen noch analog zu den Schwenk-Sicherungsmitteln 45 ausgebildete Schwenk-Sicherungsmittel vorsehen. Selbstverständlich kann man anstelle der zum Verschwenken der Klappe 4 dienenden SchwenkAntriebsvorrichtung 90 eine Schwenk-Antriebsvorrichtung zum Verschwenken der im oberen Gehäuse gelagerten Klappe vorsehen.

Ferner kann man die kreisförmigen Scheiben 23, 63 eventuell durch Scheiben ersetzen, die in der Draufsicht auf ihre Stirnflächen einen polygonförmigen oder ovalen Umriss haben. Die Formen der Öffnungen 16, 56 sowie der Innenflächenabschnitte 11h, 51h wären dann anzupassen, wobei die den letzteren entsprechenden Innenflächenabschnitte in zu den Schwenkachsen rechtwinkligen Querschnitten vorzugsweise kreisbogenförmig sind.

Des weitern kann man eine erfindungsgemässe Verbindungsund Verschluss-Einrichtung mit einem oben an einem fahrbaren Behälter angeordneten Gehäuse versehen, das eine gegen oben offene, mit einer Klappe verschliessbare Öffnung hat, durch welche ein fliessfähiges Gut in den Behälter hinein geleitet werden kann.

Wie beschrieben, liegt die Ringfläche llc, 51c von jedem Gehäuse 1 bzw. 2 beim gezeichneten Ausführungsbeispiel der erfindungsgemässen Einrichtung in einer ebenen Verbindungsfläche, die mit der vom Öffnungsrand 16a bzw. 56a umschlossenen und definierten, ebenen Mündungsfläche zusammenfällt und gegen die Schwenkachse 7 bzw. 8 geneigt ist. Die Verbindungs- und Mündungsflächen könnten jedoch eventuell ein wenig von einer Ebene abweichen. Die Mündungsfläche jedes Gehäuses kann dann die kleinstmögliche vom Öffnungsrand des betreffenden Gehäuses umschlossene und mit diesem Öffnungsrand zusammenhängende Fläche bilden. Die Mündungs- und Verbindungsflächen können zum Beispiel in einem durch die Hauptachsen 5,6 sowie Schwenkachsen 7,8 verlaufenden Schnitt mindestens stellenweise gebogen und/oder abgewinkelt sowie in zu den Schwenkachsen rechtwinkligen Schnitten gerade sein. Die Kontaktfläche der sich im betreffenden Gehäuse befindenden Klappe könnte dann in der Schliess-Stellung der Klappe ebenfalls in der nicht-ebenen Verbindungsfläche liegen. Die Schwenkachsen sollen dann die Mündungs- und Verbindungsflächen immer noch durchdringen. Die Mündungs- und Verbindungsflächen können dann immer noch - mindestens im allgemeinen - gegen die Schwenkachsen geneigt sein, so dass die Schwenkachsen diese Flächen unter einem spitzen Winkel kreuzen. Zudem können die Durchgänge der beiden Gehäuse - wenn die letzteren miteinander verbunden sind - gegeneinander geneigte Achsen haben.

## Patentansprüche

1. Einrichtung zum Transferieren eines fliessfähigen, insbesondere teilchenförmigen Gutes, mit zwei Gehäusen (1, 2), von denen jedes eine Öffnung (16, 56) aufweist und eine Klappe (3, 4) um eine Schwenkachse (7, 8) schwenkbar hält, wobei die beiden Gehäuse (1, 2) wahlweise voneinander trennbar und in eine Verbindungs-Stellung bringbar sind, in der sie mit die Öffnungen (16, 56) umschliessenden Stossbereichen (14, 54) aneinander stossen, wobei jede Klappe (3, 4) wahlweise in eine Schliess-Stellung, in der die Klappe (3, 4) die Öffnung (16, 56) des betreffenden Gehäuses (1, 2) abschliesst, und in eine Freigabe-Stellung schwenkbar ist, in der die Klappe (3, 4) die Öffnung (16, 56) mindestens zum Teil freigibt, wobei die Klappen (3, 4) in der Verbindungs-Stellung der Gehäuse (1, 2) aneinander anliegen und wobei die beiden Schwenkachsen (7, 8) in der Verbindungs-Stellung der Gehäuse (1, 2) zusammenfallen, jede Klappe (3, 4) mit einem Schwenkzapfen (27, 67) in einem der Gehäuse (1, 2) gelagert ist und jede Schwenkachse (7, 8) beim Schwenkzapfen (27, 67) in das betreffende Gehäuse (1, 2) hineindringt und durch die Öffnung (16, 56) des betreffenden Gehäuses (1, 2) aus diesem herausdringt, dadurch gekennzeichnet, dass jede Klape (3, 4) in der Schliess-Stellung durch eine hohle und durch Aufblasen dehnbare Dichtung (24, 64) gegen das die betreffende Klappe (3, 4) haltende Gehäuse (1, 2) abdichtbar ist.

2. Einrichtung nach Anspruch 1, dadurch gekennzeichnet, dass jedes Gehäuse (1, 2) einen an die Öffnung (15, 55) angrenzenden und/oder diese bildenden Innenflächenabschnitt (11h, 51h) besitzt, der einen Teil einer Kugelfläche bildet, deren Zentrum auf der zugeordneten Schwenkachse (7, 8) liegt wobei jede Klappe (3, 4) vorzugsweise eine in einer Draufsicht kreisförmige Scheibe (23, 63) besitzt.

3. Einrichtung nach Anspruch 1 oder 2, dadurch gekennzeichnet, dass jede Klappe (3, 4) ausschliesslich mit einem einzigen, auf einer Seite von ihr angeordneten Schwenkzapfen (27, 67) schwenkbar gelagert ist und einen starr mit diesem verbundenen Verschlusskörper besitzt, der die Öffnung (16, 56) des betreffenden Gehäuses (1, 2) in der Schliess-Stellung abschliesst.

4. Einrichtung nach Anspruch 3, dadurch gekennzeichnet, dass jeder Schwenkzapfen (27, 67) schwenkbar im betreffenden Gehäuse (1, 2) gelagert ist und dass jeder Verschlusskörper mit Befestigungsmitteln (39) lösbar im betreffenden Gehäuse (1,2) gehalten ist und bei gelösten Befestigungsmitteln (39) durch die Öffnung (16, 56) aus dem betreffenden Gehäuse (1, 2) herausnehmbar ist.

5. Einrichtung nach einem der Ansprüche 1 bis 4, dadurch gekennzeichnet, dass jedes Gehäuse (1, 2) ein die Schwenkachse (7, 8) der im betreffenden Gehäuse (1, 2) gehaltenen Klappe (3, 4) in einem zur Schwenkachse (7, 8) rechtwinkligen Querschnitt vollständig umschliessendes Loch (19, 59) hat, das mindestens einen Teil des Schwenkzapfens (27, 67) der betreffenden Klappe (3, 4) enthält.

6. Einrichtung nach Anspruch 5, dadurch gekennzeichnet, dass das Loch (19, 59) jedes Gehäuses (1, 2) und der sich in einem der Löcher (19, 59) befindende Teil jedes Schwenkzapfens (27, 67) mindestens teilweise rotationssymmetrisch zur betreffenden Schwenkachse (7, 8) sind.

7. Einrichtung nach Anspruch 6, dadurch gekennzeichnet, dass mindestens ein rotationssymmetrischer Abschnitt (31a) jedes Schwenkzapfens (27, 67) durch mindestens eine den Schwenkzapfen (27, 67) umschliessende Dichtung (33, 34) gegen einen den betreffenden Schwenkzapfen (27, 67) umschliessenden Abschnitt des betreffenden Gehäuses (1, 2) und/oder ein von diesem gehaltenes Lager (20) abgedichtet ist.

8. Einrichtung nach einem der Ansprüche 5 bis 7, dadurch gekennzeichnet, dass jeder Schwenkzapfen (27, 67) in mindestens einem ihn im Querschnitt umschliessenden Abschnitt des Lochs (19, 59) schwenkbar gelagert ist, wobei jedes Gehäuse (1, 2) zum Beispiel einen seine Öffnung (16, 56) begrenzenden, einstückigen Hohlkörper (11, 51) und zum Beispiel eine starr mit diesem verbundene Hülse (17, 57) aufweist, die mindestens einen Teil des Lochs (19, 59) des betreffenden Gehäuses (1, 2) bildet und mindestens ein Lager (20, 37) zum Lagern des vom betreffenden Loch (19, 59) umschlossenen Schwenkzapfens (37, 57) enthält und/oder bildet.

9. Einrichtung nach einem der Ansprüche 1 bis 8, dadurch gekennzeichnet, dass mit den Schwenkzapfen (27, 67) zusammenwirkende Schwenk-Sicherungsmitttel (45, 85) vorhanden sind, um die beiden Klappen (3, 4) in der Schliess-Stellung gegen unbeabsichtigte Verschwenkungen zu sichern, wobei die Schwenk-Sicherungsmittel (45, 85) vorzugsweise ein federbelastetes, in der Schliess-Stellung der einen Klappe (3) einrastendes Rastelement (41) aufweisen, das den Schwenkzapfen (27) dieser Klappe (3) in eingerastetem Zustand unverschwenkbar mit dem diese Klappe (3) haltenden Gehäuse (1) verbindet, und wobei vorzugsweise der Schwenkzapfen (67) der anderen Klappe (4) mit einer ihm Ruhezustand auch Schwenk-Sicherungsmittel (85) bildenden Schwenk-Antriebsvorrichtung (80) verbunden ist, die zum Beispiel elektrisch oder pneumatisch oder hydraulisch betätigbar ist.

10. Einrichtung nach einem der Ansprüche 1 bis 9, dadurch gekennzeichnet, dass jede hohle Dichtung (24, 64) mit einer Gas-Zufuhrvorrichtung (48, 88) verbunden oder verbindbar ist, die ausgebildet ist, um dem Hohlraum der Dichtung (24, 64) wahlweise ein unter Druck stehendes Gas, beispielsweise Druckluft, zuzuführen oder um die hohle Dichtung (24, 64) zu entlüften.

11. Einrichtung nach einem der Ansprüche 1 bis 10, dadurch gekennzeichnet, dass jede hohle Dichtung (24, 64) an einer der Klappen (3, 4) gehalten und durch den zu dieser gehörenden Schwenkzapfen (27, 67) hindurch mit einer Gas-Zufuhrvorrichtung (48, 88) verbindbar ist.

12. Einrichtung nach Anspruch 11, dadurch gekennzeichnet, dass jede Klappe (3, 4) eine Scheibe (23, 63) mit einer Rückfläche (23e) und einem Rand (23f) aufweist, dass die Rückfläche (23e) der jeweils anderen Klappe (3, 4) bei miteinander verbundenen Gehäusen (1, 2) abgewandt ist, dass der Rand (23f) jeder Klappe (3, 4) mit einer Ringnut (23g) versehen ist, welche die der betreffenden Klappe 3, 4) zugeordnete, hohle Dichtung (23, 24) hält, dass jede Scheibe (23, 63) bei ihrer Rückfläche (23e) mit dem der betreffenden Klappe (3, 4) zugeordneten Schwenkzapfen (27, 67) verbunden ist, dass jede hohle Dichtung (24, 64) durch eine Gas-Leitung (47, 87) mit der Gas-Zufuhrvorrichtung (48, 88) verbunden ist und dass jede Gas-Leitung (47. 87) von der hohlen Dichtung (24, 64) durch einen Abschnitt der diese haltenden Scheibe (23, 63) und durch die Rückfläche (23e) dieser Scheibe (23, 63) hindurch in den zugeordneten Schwenkzapfen hineinverläuft.

13. Einrichtung nach einem der Ansprüche 1 bis 12, dadurch gekennzeichnet, dass die beiden Klappen (3, 4) bei sich in der Verbindungs-Stellung befindenden Gehäusen (1, 2) zusammen einen Hohlraum begrenzen, der durch den Schwenkzapfen (67) von einer der Klappen (3, 4) hindurch mit einer Saugvorrichtung (90) verbindbar ist.

14. Einrichtung nach einem der Ansprüche 1 bis 13, dadurch gekennzeichnet, dass jedes Gehäuse (1, 2) einen seine Öffnung (16, 56) umschliessenden Öffnungsrand (16a, 56a) hat, der eine Mündungsfläche der Öffnung (16, 56) umschliesst sowie definiert, und dass jede Mündungsfläche die vom betreffenden Gehäuse (1, 2) definierte Schwenkachse (7, 8) unter einem spitzen Winkel kreuzt, der vorzugsweise mindestens 5°, vorzugsweise höchstens 45° und zum Beispiel 10° bis 30° beträgt.

15. Einrichtung nach Anspruch 14, dadurch gekennzeichnet, dass die Mündungsfläche jeder Öffnung (16, 56) eben ist, wobei der Stossbereich (14, 54) jedes Gehäuses (1, 2) vorzugsweise eine an den Öffnungsrand (16a, 56a) des betreffenden Gehäuses (1, 2) angrenzenden und/oder diesen bildenden, ebene Ringfläche (11c, 51c) hat, die in der gleichen Ebene wie die Mündungsfläche liegt.

16. Einrichtung nach Anspruch 14 oder 15, dadurch gekennzeichnet, dass das eine, erste Gehäuse (1) an einem einen Behälter-Innenraum (109) umschliessenden Behälter (102) befestigt ist und einen seine Öffnung (16) mit dem Behälter-Innenraum (109) verbindenden Hohlraum (15) begrenzt, dass das erste Gehäuse (1) und der Behälter (102) mit einem das auf einer ebenen Lauffläche (116) fahrbaren Fahrwerk (111) verbunden sind und dass die Mündungsflächen der beiden Gehäuse (1, 2) in der Verbindungs-Stellung der letzteren in einem durch die Schwenkachsen (7, 8) verlaufenden, zur Lauffläche (116) rechtwinkligen Schnitt gegen die Lauffläche (116) geneigt sind.

17. Einrichtung nach Anspruch 16, dadurch gekennzeichnet, dass Führungsmittel vorhanden sind, um das erste Gehäuse (1), wenn es mit dem Fahrwerk (111) gegen die Verbindungs-Stellung gefahren wird, mindestens in einem Fahrwegabschnitt, in dem sich die Öffnungen (16, 56) in einer zur Lauffläche (116) rechtwinkigen Blickrichtung überlappen, in einer Richtung zu führen, die in der genannten Blickrichtung parallel zu der vom zweiten Gehäuse (2) definierten Schwenkachse (8) ist.

18. Einrichtung nach Anspruch 16 oder 17, dadurch gekennzeichnet, dass das andere, zweite Gehäuse (2) mindestens annähernd vertikal verschiebbar an einem Support (123) gehalten ist und dass mindestens eine Feder (128) vorhanden ist, welche das zweite Gehäuse (2) mit einer in der Verbindungs-Stellung der Gehäuse (1, 2) gegen das erste Gehäuse (1) gerichteten Federkraft beaufschlagt, wobei zum Beispiel eine Laufrolle (118) derart am ersten Gehäuse (1) drehbar gelagert ist, dass sie bei der Fahrt des ersten Gehäuses (1) in die Verbindungs-Stellung auf dem zweiten Gehäuse (2) und/oder auf der von diesem gehaltenen Klappe (4) abrollt und das zweite Gehäuse (2) entgegen der Federkraft vorübergehend vom ersten Gehäuse (1) wegdrückt.

## Claims

1. Device for transferring a flowable, in particular particulate material, said device having two housings (1, 2), each of which has an orifice (16, 56) and holds a flap (3, 4) that is pivotable about an axis (7, 8) of rotation, the two housings (1, 2) optionally being separable from one another and being capable of being brought into a connected position in which they abut one another in abutting regions (14, 54) surrounding the orifices (16, 56), each flap (3, 4) optionally being pivotable into a closed position, in which the flap (3, 4) closes the orifice (16, 56) of the relevant housing (1, 2), and into an open position, in which the flap (3, 4) at least partly opens the orifice (16, 56), the flaps (3, 4) being adjacent to one another when the housings (1, 2) are in the connected position, and the two axes (7, 8) of rotation coinciding when the housings (1, 2) are in the connected position, each flap (3, 4) being mounted with a pivot (27, 67) in one of the housings (1, 2) and each axis (7, 8) of rotation passing into the relevant housing (1, 2) at the pivot (27, 67) and emerging from said housing through the orifice (16, 56) of the relevant housing (1, 2), characterized in that each flap in the closed position can be sealed from the housing (1, 2) holding the relevant flap (3, 4) by means of a hollow seal (24, 64) extendable by inflation.

2. Device according to Claim 1, characterized in that each housing (1, 2) has an inner surface section (11h, 51h) which borders the orifice and/or forms said orifice and which forms a part of a spherical surface, the centre of which lies on the associated axis (7, 8) of rotation, each flap (3, 4) preferably having a disc (23, 63) which is circular in plan view.

3. Device according to Claim 1 or 2, characterized in that each flap (3, 4) is pivotably mounted exclusively with a single pivot (27, 67) arranged on one side of said flap and said flap has closure member rigidly connected to said pivot for closing the orifice (16, 56) of the relevant housing (1, 2) in the closed position.

4. Device according to Claim 3, characterized in that each pivot (27, 67) is pivotably mounted in the relevant housing (1, 2) and that each closure member is detachably held in the relevant housing (1, 2) by fixing means (39) and, when the fixing means (39) is released, can be removed from the relevant housing (1, 2) through the orifice (16, 56).

5. Device according to any of Claims 1 to 4, characterized in that each housing (1, 2) has a hole (19, 59) which completely surrounds the axis (7, 8) of rotation of the flap (3, 4) held in the relevant housing (1, 2), in a cross-section at right angles to the axis (7, 8) of rotation, said hole containing at least a part of the pivot (27, 67) of the relevant flap (3, 4).

6. Device according to Claim 5, characterized in that the hole (19, 59) of each housing (1, 2) and that part of each pivot (27, 67) which is present in one of the holes (19, 59) are at least partly rotationally symmetrical with respect to the relevant axis (7, 8) of rotation.

7. Device according to Claim 6, characterized in that at least one rotationally symmetrical section (31a) of each pivot (27, 67) is sealed by at least one seal (33, 34), surrounding the pivot (27, 67), from a section of the relevant housing (1, 2) which surrounds the relevant pivot (27, 67) and/or a bearing (20) held by said housing.

8. Device according to any of Claims 5 to 7, characterized in that each pivot (27, 67) is rotatably mounted in at least one section of the hole (19, 59), which section surrounds said pivot in cross-section, each housing (1, 2) including, for example, a one-piece hollow body (11, 51) bounding its orifice (16, 56) and, for example, a sleeve (17, 57) rigidly connected to said hollow body and forming at least a part of the hole (19, 59) of the relevant housing (1, 2), said sleeve containing and/or forming at least one bearing (20, 37) for supporting the pivot (27, 67) surrounded by the relevant hole (19, 59).

9. Device according to any of Claims 1 to 8, characterized in that rotation-preventing means (45, 85) interacting with the pivots (27, 67) are present for securing the two flaps (3, 4) in the closed position and preventing them from unintentionally swivelling, the rotation-preventing means (45, 85) preferably including a spring-loaded locking element (41) which locks in the closed position of one flap (3) and connects the pivot (27) of this flap (3) in the locked state in a nonpivotable manner to the housing (1) holding this flap (3), and preferably the pivot (67) of the other flap (4) being connected to a pivot drive apparatus (80) which in the non-driven state also forms rotation-preventing means and can be operated, for example, electrically or pneumatically or hydraulically.

10. Device according to any of Claims 1 to 9, characterized in that each hollow seal (24, 64) is or can be connected to a gas supply apparatus (48, 88) which is formed optionally for supplying a pressurized gas, for example compressed air, to the cavity of the seal (24, 64) or for venting the hollow seal (24, 64).

11. Device according to any of Claims 1 to 10, characterized in that each hollow seal (24, 64) is held on one of the flaps (3, 4) and can be connected to a gas supply apparatus (44, 88) through the pivot (27, 67) of one of said flaps.

12. Device according to Claim 11, characterized in that each flap (3, 4) has a disc (23, 63) with a back surface (23e) and an edge (23f), that the back surface (23e) of the other flap (3, 4) in each case faces away when housings (1, 2) are connected to one another, that the edge (23f) of each flap (3, 4) is provided with an annular groove (23g) which holds the hollow seal (23, 24) coordinated with the relevant flap (3, 4), that each disc (23, 63) is connected at the back surface (23e) to the pivot (27, 67) coordinated with the relevant flap (3, 4), that each hollow seal (24, 64) is connected by a gas pipe (47, 87) to the gas supply apparatus (48, 88) and that each gas pipe (47, 87) runs from the hollow seal (24, 64) through a section of the disc (23, 63) holding said seal and through the back surface (23e) of this disc (23, 63) into the coordinated pivot.

13. Device according to any of Claims 1 to 12, characterized in that, when housings (1, 2) are in the closed position, the two flaps (3, 4) together bound a cavity which can be connected to a suction apparatus (90) through the pivot (67) of one of the flaps (3, 4).

14. Device according to any of Claims 1 to 13, characterized in that each housing (1, 2) has an orifice edge (16a, 56a) which surrounds its orifice (16, 56) and surrounds and defines a mouth area of the orifice (16, 56), and that each mouth area intersects the axis (7, 8) of rotation defined by the relevant housing (1, 2) at an acute angle which is preferably at least 5°, preferably at most 45° and, for example 10° to 30°.

15. Device according to Claim 14, characterized in that the mouth area of each orifice (16, 56) is flat, the abutting region (14, 54) of each housing (1, 2) preferably having a flat annular surface (11c, 51c) which borders the orifice edge (16a, 56a) of the relevant housing (1, 2) and/or forms said edge and lies in the same plane as the mouth area.

16. Device according to Claim 14 or 15, characterized in that a first of said two housings (1) is fixed to a container (102) surrounding a container inner space (109) and bounds a cavity (15) connecting said first housing orifice (16) to the container inner space (109), that the first housing (1) and the container (102) are connected to a chassis (111) which can be driven on a flat running surface (116) and that the mouth areas of the two housings (1, 2), in the connected position of the two housings, are inclined relative to the running surface (116) in a section passing through the axes (7, 8) of rotation and at right angles to the running surface (116).

17. Device according to Claim 16, characterized in that guide means are present for guiding the first housing (1), when it is driven via the chassis (111) towards the connected position, at least in a travel segment in which the orifices (16, 56) overlap in a viewing direction at right angles to the running surface (116), in a direction which, in said viewing direction, is parallel to the axis (8) of rotation defined by the second housing (2).

18. Device according to Claims 16 or 17, characterized in that the other, second housing (2) is held on a support (123) in an at least approximately vertically displaceable manner and that at least one spring (128) is present for exerting on the second housing, in the connected position of the housings (1, 2), a spring force directed towards the first housing (1), for example a roller (118) being rotatably mounted on the first housing (1) such that, during the travel of the first housing (1) to the connected position, said roller rolls on the second housing (2) and/or on the flap (4) held by said second housing and presses second housing (2) temporarily away from the first housing (1) against the spring force.

## Revendications

1. Dispositif pour le transfert d'un produit pouvant s'écouler, en particulier un produit en particules, comportant deux boîtiers (1, 2) qui présentent chacun une ouverture (16, 56) et qui retiennent un clapet (3, 4) pouvant pivoter autour d'un axe de pivotement (7, 8), les deux boîtiers (1, 2) pouvant au choix être séparés l'un de l'autre ou être amenés dans une position de liaison dans laquelle ils viennent se joindre l'un à l'autre par des régions de raccord (14, 54) entourant les ouvertures (16, 56), chaque clapet (3, 4) pouvant être au choix tourné dans une position de fermeture dans laquelle le clapet (3, 4) ferme l'ouverture (16, 56) du boîtier (1, 2) concerné ou dans une position de libération dans laquelle le clapet (3, 4) libère au moins partiellement l'ouverture (16, 56), les clapets (3, 4) reposant l'un contre l'autre lorsque les boîtiers (1, 2) sont dans la position de liaison, et les deux axes de pivotement (7, 8) coïncidant lorsque les boîtiers (1, 2) sont dans la position de liaison, chaque clapet (3, 4) étant monté dans l'un des boîtiers (1, 2) au moyen d'un tourillon de pivotement (27, 67) et chaque axe de pivotement (7, 8) pénétrant dans le boîtier (1, 2) concerné par son tourillon de pivotement (27, 67) et ressortant du boîtier (1, 2) concerné par l'ouverture (16, 56), caractérisé en ce que dans sa position de fermeture, chaque clapet (3, 4) peut être rendu étanche vis-à-vis du boîtier (1, 2) portant le clapet (3, 4) concerné, par un joint d'étanchéité (24, 64) creux et pouvant se dilater par gonflage.

2. Dispositif selon la revendication 1, caractérisé en ce que chaque boîtier (1, 2) possède une partie de surface interne (11h, 51h) contiguë à l'ouverture (15, 55) et/ou formant celle-ci, et qui forme une partie d'une surface sphérique dont le centre est situé sur l'axe de pivotement (7, 8) associé, chaque clapet (3, 4) possédant de préférence une plaque (23, 63) circulaire lorsqu'elle est vue en plan.

3. Dispositif selon les revendications 1 ou 2, caractérisé en ce que chaque clapet (3, 4) est monté de manière à pouvoir pivoter uniquement autour d'un unique tourillon de pivotement (27, 67) disposé sur l'un de ses côtés, et possède un corps de fermeture solidaire de ce tourillon de pivotement et qui ferme l'ouverture (16, 56) du boîtier (1, 2) concerné lorsqu'il se trouve en position de fermeture.

4. Dispositif selon la revendication 3, caractérisé en ce que chaque tourillon de pivotement (27, 67) est monté de manière à pouvoir pivoter dans le boîtier (1, 2) concerné, et en ce que chaque corps de fermeture est porté de manière libérable dans le boîtier (1, 2) concerné par des moyens de fixation (39) et peut être extrait du boîtier (1, 2) concerné par l'ouverture (16, 56) lorsque les moyens de fixation (39) sont libérés.

5. Dispositif selon l'une des revendications 1 à 4, caractérisé en ce que chaque boîtier (1, 2) possède un trou (19, 59) qui, vu dans une coupe transversale perpendiculaire à l'axe de pivotement (7, 8), entoure complètement l'axe de pivotement (7, 8) du clapet (3, 4) porté dans le boîtier (1, 2) concerné, lequel trou contient au moins une partie du tourillon de pivotement (27, 67) du clapet (3, 4) concerné.

6. Dispositif selon la revendication 5, caractérisé en ce que le trou (19, 59) de chaque boîtier (1, 2) et la partie de chaque tourillon de pivotement (27, 67) qui se trouve dans l'un des trous (19, 59) présente au moins en partie une symétrie de rotation par rapport à l'axe de pivotement (7, 8) concerné.

7. Dispositif selon la revendication 6, caractérisé en ce qu'au moins un joint d'étanchéité (33, 34) entourant le tourillon de pivotement (27, 67) rend au moins une partie (31a) à symétrie de rotation de chaque tourillon de pivotement (27, 67) étanche vis-à-vis d'une partie du boîtier (1, 2) concerné et/ou d'un palier (20) porté par ce dernier et entourant l'un des tourillons de pivotement (27, 67) concerné.

8. Dispositif selon l'une des revendications 5 à 7, caractérisé en ce que chaque tourillon de pivotement (27, 67) est monté de manière à pouvoir pivoter dans au moins une partie du trou (19, 59) qui l'entoure en coupe transversale, chaque boîtier (1, 2) présentant par exemple un corps creux (11, 51) d'un seul tenant délimitant son ouverture (16, 56) et présentant par exemple un manchon (17, 57) relié rigidement à ce corps creux, lequel manchon forme au moins une partie du trou (19, 59) du boîtier (1, 2) concerné et contenant et'ou formant au moins un palier (20, 37) pour le montage du tourillon de pivotement (27, 67) entouré par le trou (19, 59) concerné.

9. Dispositif selon l'une des revendications 1 à 8, caractérisé en ce que des moyens de blocage de pivotement (45, 85) coopérant avec les tourillons de pivotement (27, 27) sont prévus pour empêcher que les deux clapets (3, 4) pivotent de manière intempestive lorsqu'ils sont dans la position de fermeture, les moyens (45, 85) de blocage du pivotement présentant de préférence un élément d'accrochage élastique (41) placé sous la contrainte d'un ressort et accrochant élastiquement le clapet (3) lorsqu'il se trouve dans sa position de fermeture, et lorsqu'il se trouve dans sa position de non accrochage, cet élément d'accrochage élastique relie le tourillon de pivotement (27) de ce clapet (3) au boîtier (1) portant ce clapet (3), et le tourillon de pivotement (67) de l'autre clapet (4) est de préférence relié à un dispositif (80) d'entraînement du pivotement formant également un moyen (85) de blocage du pivotement dans la position de repos, ce dispositif d'entraînement du pivotement pouvant être actionné par exemple électriquement, pneumatiquement ou hydrauliquement.

10. Dispositif selon l'une des revendications 1 à 9, caractérisé en ce que chaque joint d'étanchéité creux (24, 64) est relié ou peut être relié à un dispositif (48, 88) d'apport de gaz qui est configuré de manière à au choix apporter dans l'espace creux du joint d'étanchéité (24, 64) un gaz sous pression, par exemple de l'air comprimé, ou vider le joint d'étanchéité creux (24, 64).

11. Dispositif selon l'une des revendications 1 à 10, caractérisé en ce que chaque joint d'étanchéité creux (24, 64) est porté sur un des clapets (3, 4) et peut être relié à un dispositif (48, 88) d'apport de gaz à travers le tourillon de pivotement (27, 67) appartenant à ce clapet.

12. Dispositif selon la revendication 11, caractérisé en ce que chaque clapet (3, 4) présente une plaque (23, 63) dotée d'une surface arrière (23e) et d'une bordure (23f), en ce que la surface arrière (23e) n'est pas tournée vers celle de l'autre clapet de la paire de clapets (3, 4) lorsque les boîtiers (1, 2) sont reliés l'un à l'autre, en ce que le bord (23f) de chaque clapet (3, 4) est doté d'une rainure annulaire (23g) qui porte le joint d'étanchéité creux (23, 24) associé au clapet (3, 4) concerné, en ce que chaque plaque (23, 63) est reliée par sa surface arrière (23e) au tourillon de pivotement (27, 67) associé au clapet (3, 4) concerné, en ce que chaque joint d'étanchéité creux (24, 64) est relié au dispositif d'apport de gaz (48, 88) par une conduite de gaz (47, 87), et en ce que chaque conduite de gaz (47, 87) partant du joint d'étanchéité creux (24, 64) pénètre dans le tourillon de pivotement associé en traversant une partie de la plaque (23, 63) portant ce joint d'étanchéité creux et la surface arrière (23e) de cette plaque (23, 63).

13. Dispositif selon l'une des revendications 1 à 12, caractérisé en ce que lorsque les boîtiers (1, 2) se trouvent dans leur position de liaison, les deux clapets (3, 4) délimitent ensemble un espace creux qui peut être relié à un dispositif d'aspiration (90) à travers le tourillon de pivotement (67) de l'un des clapets (3, 4).

14. Dispositif selon l'une des revendications 1 à 13, caractérisé en ce que chaque boîtier (1, 2) présente une bordure d'ouverture (16a, 56a) qui entoure son ouverture (16, 56), laquelle bordure entoure et définit une surface d'embouchure de l'ouverture (16, 56), et en ce que chaque surface d'embouchure croise l'axe de pivotement (7, 8) défini par le boîtier (1, 2) concerné suivant un angle aigu qui vaut de préférence au moins 5°, de préférence au plus 45° et par exemple de 10° à 30°.

15. Dispositif selon la revendication 14, caractérisé en ce que la surface d'embouchure de chaque ouverture (16, 56) est plane, la région du joint (14, 54) de chaque boîtier (1, 2) présentant de préférence une surface annulaire (11c, 51c) plane contiguë à la bordure d'ouverture (16a, 56a) du boîtier (1, 2) concerné et/ou formant cette bordure, laquelle surface annulaire est disposée dans le même plan que la surface d'embouchure.

16. Dispositif selon les revendications 14 ou 15, caractérisé en ce que l'un des boîtiers, à savoir le premier boîtier (1), est fixé sur un récipient (102) entourant un espace interne de récipient (109) et délimite un espace creux (15) reliant son ouverture (16) à l'espace interne de récipient (109), en ce que le premier boîtier (1) et le récipient (102) sont reliés à un train de roulement (111) pouvant se déplacer sur une surface de déplacement plane (116), et en ce que, lorsque les deux boîtiers (1, 2) se trouvent dans leur position de liaison, leurs surfaces d'embouchure sont inclinées en direction de la surface de déplacement (116) lorsqu'elles sont vues dans une coupe passant par les axes de pivotement (7, 8) et perpendiculaire à la surface de déplacement (116).

17. Dispositif selon la revendication 16, caractérisé en ce que des moyens de guidage sont prévus pour, lorsque le premier boîtier (1) est déplacé vers la position de liaison par le train de roulement (111), au moins dans une partie du parcours de déplacement dans laquelle les ouvertures (16, 56) se superposent lorsqu'elles sont vues dans une direction perpendiculaire à la surface de déplacement (116), le guider dans une direction qui, dans ladite direction de vue, est parallèle à l'axe de pivotement (8) défini par le deuxième boîtier (2).

18. Dispositif selon les revendications 16 ou 17, caractérisé en ce que l'autre boîtiers, à savoir le deuxième boîtier (2), est maintenu sur un support (123) de manière à pouvoir coulisser au moins approximativement à la verticale, et en ce qu'il est prévu au moins un ressort (128) qui sollicite le deuxième boîtier (2) avec une force élastique dirigée vers le premier boîtier (1) lorsque les boîtiers (1, 2) se trouvent dans la position de liaison, et par exemple un galet de roulement (118) est monté sur le premier boîtier (1) de manière à pouvoir tourner, de telle sorte que lorsque le premier boîtier (1) se déplace dans la position de liaison, ce galet roule sur le deuxième boîtier (2) et/ou sur le clapet (4) porté par ce dernier, et éloigne momentanément le deuxième boîtier (2) du premier boîtier (1) en opposition à la force élastique.
